(19) Europäisches Patentamt
European Patent Office
Office européen des brevets

(11) **EP 3 165 876 A2**

(12) **EUROPÄISCHE PATENTANMELDUNG**

(43) Veröffentlichungstag:
10.05.2017  Patentblatt 2017/19

(21) Anmeldenummer: 16179816.0

(22) Anmeldetag: **15.07.2016**

(51) Int Cl.:
*G01C 15/00* (2006.01)     *G01C 3/08* (2006.01)
*G01S 17/42* (2006.01)     *G01S 17/66* (2006.01)
*G01S 17/89* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **03.11.2015  EP 15192822**

(71) Anmelder: **Hexagon Technology Center GmbH
9435 Heerbrugg (CH)**

(72) Erfinder: **HINDERLING, Jürg
CH-9437 Marbach (CH)**

(74) Vertreter: **Gyaja, Christoph Benjamin
Kaminski Harmann
Patentanwälte AG
Landstrasse 124
9490 Vaduz (LI)**

(54) **OPTO-ELEKTRONISCHES VERMESSUNGSGERÄT**

(57)  Opto-elektronisches Vermessungsgerät (1) zur Distanz- und/oder Positionsbestimmung mit einer Strahlungsquelle (35, 40, 75, 310) zur Erzeugung optischer Messstrahlung (30, 36) einer ersten Wellenlänge, wobei die Messstrahlung (30, 36) gerichtet in den freien Raum emittiert wird. Die Strahlungsquelle (35, 40, 75, 310) ist derart ausgebildet, dass die erste Wellenlänge im Bereich zwischen 1210nm und 1400nm liegt und die Leistung der emittierten Messstrahlung (30, 36) im zeitlichen und räumlichen Mittel wenigstens 14mW beträgt.

Fig 4

EP 3 165 876 A2

**Beschreibung**

Die Erfindung betrifft ein opto-elektronisches Vermessungsgerät nach dem Oberbegriff von Anspruch 1 und ein opto-elektronisches Messverfahren nach dem Oberbegriff des Anspruchs 12.

Opto-elektronische Vermessungsgeräte, mit welchen basierend auf optischer Strahlung eine Distanz- und/oder Position bestimmt wird, sind in vielfältigen Formen bekannt. Beispiele sind geodätische Vermessungsgeräte wie elektronische Tachymeter, Total- oder Multistationen oder Laserscanner für geodätische oder industrielle Vermessungszwecke, Lasertracker oder handhaltbare elektronische Distanz- oder Richtungsmesser. Diesen Geräten ist gemeinsam, dass sie wenigstens eine Strahlungsquelle zur Erzeugung von Messstrahlung aufweisen und optische Mittel wie Linsen, lichtleitende Fasern oder Kollimatoren, mittels derer die erzeugte Messstrahlung in den freien Raum auf ein zu vermessendes Ziel emittierbar ist, weswegen diese Geräte auch als sog. Freistrahlsensoren bezeichnet werden. Das zu vermessende Ziel ist z.B. ein Punkt einer Oberfläche eines natürlichen Objekts oder ein speziell für Vermessungszwecke ausgebildetes Ziel wie beispielsweise ein Retroreflektor. Das angestrahlte Ziel reflektiert Messstrahlung diffus oder gerichtet, so dass zumindest ein Teil der Messstrahlung auf das Vermessungsgerät zurückgeworfen wird. Das Vermessungsgerät weist einen opto-elektronischen Sensor auf, welcher ausgebildet ist zur zeit- und/oder ortsaufgelösten Detektion der Messstrahlung, z.B. eine PIN-Diode, ein CMOS-Chip oder positionssensitiven Detektor (PSD). Anhand der detektierten Messstrahlung wird die gesuchte Messgrösse, z.B. ein Entfernungs- oder Richtungswert oder eine 2D-/3D-Koordinate, bestimmt.

Hierbei stehen verschiedene Messprinzipien zur Verfügung, wie z. B. Phasendifferenzmessung oder Laufzeitmessung (time of flight, TOF) oder Messung basierend auf dem Fizeau-Prinzip.

Unter optischer Messstrahlung wird dabei elektromagnetische Strahlung nicht nur im sichtbaren Bereich des Spektrums verstanden, sondern auch Infrarotlicht, also Strahlung mit einer Wellenlänge grösser als etwa 700nm. Bekannt sind opto-elektronische Vermessungsgeräte, die Messstrahlung mit einer Wellenlänge von 405nm, 532nm, 635nm, 650-690nm, 780nm bzw. 785nm, 795nm, 808-850nm, 905nm, 1064nm oder 1545nm bzw. 1550nm verwenden. Z.B. finden folgende Wellenlängen bei den Geräten des Herstellers Leica Geosystems Verwendung: Totalstationen TPS1200+ 660nm und 785nm, Totalstation TCA2003 850nm, Laserscanner HDS3000 532nm, Laserscanner HDS4400 905nm, Laserscanner HDS8800 1545nm, Distanzmesser Disto D5 635nm, Lasertracker AT401 795nm und luftgestützter Laserscanner ALS80 1064nm.

Die Güte des Messergebnisses bzw. die Qualität der Bestimmung der gesuchten Messgrösse ist wesentlich abhängig vom Signal-Rausch-Verhältnis (SNR).

Dieses wiederum hängt entscheidend von der erfassten Strahlungsleistung ab. Vorteilhaft ist eine hohe erfasste Strahlungsleistung, um die Messstrahlung eindeutig und scharf vom Rauschen bzw. von Hintergrundstrahlung abgrenzen zu können. Dabei ist die erfasste Strahlungsleistung (bei sonst gleich bleibenden Bedingungen) umso höher, je höher die emittierte Strahlungsleistung ist. Das Verhältnis von emittierter Strahlungsleistung $P_e$ und erfasster Strahlungsleistung $P_r$ kann dabei durch die sogenannte Radarreichweitengleichung beschrieben werden (vgl. Jelalian, A.V.: Laser Radar Systems. Artech House, 1992, S.6):

$$P_r = \frac{\pi \rho D^2}{(4R)^2} P_e \eta_{atm} \eta_{sys}$$

mit p: Reflektionskoeffizient des Ziels, D: Durchmesser der Aperturöffnung bzw. erfassenden Linse des Vermessungsgeräts; R: Entfernung zum Ziel, $\eta_{atm}$: atmosphärischer Transmissionskoeffizient und $\eta_{sys}$: Transmissionskoeffizient des Vermessungsgeräts bzw. dessen Erfassungsoptik.

Die Gleichung verdeutlicht die Tatsache, dass nur ein geringer Bruchteil der emittierten Strahlungsleistung wieder empfangen wird, also ein Grossteil der gesendeten Strahlung ungenutzt "verloren" geht. Da die Entfernung zum Ziel quadratisch eingeht, ist die maximal erzielbare Messreichweite in hohem Mass von der emittierten Leistung der Messstrahlung bzw. Energie der Strahlungsquelle abhängig. Besonders für die Messung zu einem weit entfernten Ziel sind also hohe Strahlungsleistungen von Vorteil. Vermessungsgeräte des Stands der Technik weisen jedoch vergleichsweise geringe mittlere Strahlungsleistungen im Bereich von unter einem Milliwatt bis wenige Milliwatt auf, beispielsweise beträgt die Leistung bei der Totalstation TCR1103 von Leica Geosystems 0,95mW und bei dem Distanzmesser Disto D5 von Leica Geosystems ebenfalls weniger als 1mW.

Durch geeignete Modulation des Senders mit möglichst kurzen Pulsen, das heisst mit Tastverhältnissen (Duty Cycle) wesentlich kleiner 1:100, wird versucht die Empfindlichkeit und damit Messreichweite zu erhöhen. Dabei ist die Pulsleistung invers zum Tastverhältnis höher als die mittlere Strahlungsleistung. Die Pulsdetektion und das Signalrauschverhältnis werden dabei entsprechend verbessert, trotzdem sind grosse Reichweiten bzw. Ziele in weiter Entfernung nicht oder nur unzureichend oder unpräzise messbar.

Aber auch zur Vermessung von Zielen mit geringer Reflektivität bzw. kleinem Reflektionskoeffizienten, wie sie viele natürliche Oberflächen aufweisen, ist eine hohe Strahlungsleistung wichtig. Unter natürlichen Zielen sind dabei auch menschengemachte Strukturen wie Beton, Asphalt oder Metall zu verstehen. Aber selbst bei der Verwendung nicht-natürlicher, kooperativer Ziele wie Reflexfolien, flächenhafte Rückstrahler (Katzenaugen) oder Retroreflektoren, also Ziele, die speziell zu Vermessungszwecken ausgebildet sind und Strahlung gerichtet bzw. gebündelt reflektieren, ist eine hohe Leistung von Vorteil ist, da deren Reflexionsoberfläche (z.B. ca. 0,001 m$^2$) vor allem bei grosser Entfernung zum Ziel im Verhältnis zur Fläche des Messstrahlquerschnitts klein ist, so dass auch in diesem Fall in der Praxis nur ein Bruchteil der emittierten Strahlung zurückgestrahlt wird. Ebenso ist zu berücksichtigen, dass aufgrund der geometrischen Begrenzungen der Empfängeroptik in der Regel nicht die komplette reflektierte Messstrahlung erfasst werden kann, sondern ein Grossteil ausserhalb der Apertur bzw. Empfangsoptik auf das Vermessungsgerät trifft.

Aus den genannten Gründen ist also im Hinblick auf die erzielbare Präzision und Reichweite eine möglichst hohe Leistung der Messstrahlung wünschenswert bzw. eine niedrige Leistung der Messstrahlung ist nachteilig in Bezug auf erzielbare Präzision bzw. Messreichweite.

Die Radarreichweitengleichung verweist auch auf den Reflexions- oder Rückstreugrad der zu vermessenden natürlichen Objektoberfläche. Je höher die Reflektanz umso höher ist das Empfangssignal. Die Reflektanz ist eine objektspezifische spektrale Signaturfunktion mit ausgeprägter Wellenlängenabhängigkeit. Für die Messstrahlung eines Messinstruments sollte daher vorteilhaft eine Wellenlänge gewählt werden, bei welcher die für das Messinstrument vorgesehenen Zielobjekte hohe Reflektanz aufweisen.

Zudem ist Messstrahlung von Vorteil, die möglichst wenig beim Durchgang durch den freien Raum bzw. die Atmosphäre geschwächt wird, was sich in obiger Gleichung in einem hohen atmosphärischer Transmissionskoeffizienten ausdrückt. Da die Transmission wellenlängenabhängig ist, ist Messstrahlung einer Wellenlänge, die relativ stark geschwächt wird, nachteilig, da die Leistung der empfangenen Messstrahlung und damit der Pegel des Empfangssignals dadurch besonders bei längeren Messdistanzen trotz einer hohen Leistung der emittierten Messstrahlung gering ist.

Auf der anderen Seite wirkt sich ein erhöhtes Rauschen negativ auf das Signal-Rausch-Verhältnis und damit auf das Messergebnis aus. Erhöhtes bzw. hohes Rauschen tritt vor allem bei Messungen im Freien hauptsächlich durch Sonnenstrahlung auf, die direkt oder als Umgebungslicht diffus auf die Empfangsoptik und dann auf den Sensor des Vermessungsgeräts trifft. Insbesondere beim Anzielen und Messen von hellen Oberflächen, wie weissen Hausfassaden, ist die Hintergrundstrahlung erheblich, der Shot-Noise-Pegel in der Empfangseinheit steigt an und reduziert das Signal-Rauschverhältnis und damit die Messgenauigkeit. Ein möglichst geringer Empfang von Umgebungs- bzw. Fremdstrahlung ist also hinsichtlich der Güte des Messergebnisses bzw. die Qualität der Bestimmung der gesuchten Messgrösse vorteilhaft.

Hinsichtlich der beschriebenen (Stör-)Faktoren weisen die aus dem Stand der Technik bekannten Vermessungsgeräte bzw. die emittierten Wellenlängen deren Strahlungsquellen Nachteile auf, die vor allem das Verhältnis von erfassten zur emittierten Strahlungsleistung betreffen, und weiter unten ausführlich dargelegt werden.

Aufgabe der vorliegenden Erfindung ist deshalb die Bereitstellung eines verbesserten opto-elektronischen Vermessungsgeräts zur Distanz- und/oder Positionsmessung.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen sowie der Beschreibung einschliesslich der Figurenbeschreibungen zu entnehmen. Alle dargestellten oder in dieser Schrift anderweitig offenbarten Ausführungsformen der Erfindung sind miteinander kombinierbar, wenn nicht ausdrücklich anders festgestellt.

Die Erfindung betrifft ein opto-elektronisches Vermessungsgerät zur Distanz- und/oder Positionsbestimmung mit wenigstens einer Strahlungsquelle zur Erzeugung optischer Messstrahlung einer ersten Wellenlänge. Das Vermessungsgerät weist weiter einen opto-elektronischen Sensor auf zur orts- und/oder zeitaufgelösten Detektion von Messstrahlung. Ausserdem weist das Vermessungsgerät optische Mittel auf, beispielsweise Linsen, Prismen, Kollimatoren, Spiegel und/oder Lichtfasern, welche derart zur optischen Strahlungsführung ausgebildet sind, dass die erzeugte Messstrahlung in den freien Raum auf ein zu vermessendes Ziel emittierbar ist und vom Ziel reflektierte Messstrahlung wenigstens teilweise auf den Sensor geführt wird. Erfindungsgemäss ist die Strahlungsquelle derart ausgebildet, dass die erste Wellenlänge im Nahinfrarotbereich zwischen 1210nm und 1400nm liegt. Zudem ist die Strahlungsquelle derart ausgebildet, dass die Leistung der emittierten Messstrahlung im zeitlichen und räumlichen Mittel wenigstens 14mW beträgt.

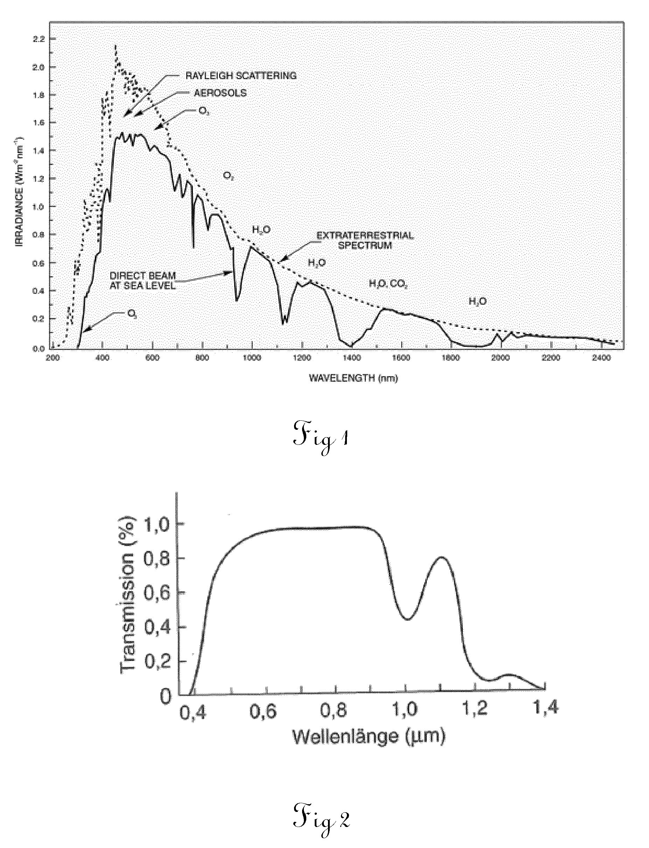

Der verwendete Wellenlängenbereich der vorliegenden Erfindung ist derart gezielt gewählt, dass damit eine Reihe von Vorteilen, besonders hinsichtlich der erfassbaren Strahlungsleistung und des Signal-Rausch-Verhältnisses, verbunden sind, was weiter unten in Verbindung mit den Figuren 1-10 dargelegt ist. Dabei bietet die vorliegende Erfindung den Vorteil einer im Vergleich zu Geräten des Stands der Technik hohen empfangbaren Messstrahlungsleistung, was eine verbesserte Messgenauigkeit und/oder Messreichweite ermöglicht bzw. eine gleich bleibende Messgenauigkeit und/oder Messreichweite bei verringerten Anforderungen und damit Herstellungskosten an das Vermessungsgerät, beispielsweise hinsichtlich einer Messsignalauswertung aufgrund eines verbesserten Signal-Rausch-Verhältnisses.

Optional liegt die erste Wellenlänge zwischen 1280nm und 1320nm, insbesondere zwischen 1290nm und 1310nm. Diese Bereiche sind, wie weiter unten dargelegt, besonders vorteilhaft für Vermessungsgeräte, die für grosse Messreichweiten ausgelegt sind. Alternativ liegt die erste Wellenlänge zwischen 1320nm und 1400nm, insbesondere zwischen 1325nm und 1345nm.

Optional wird die Messstrahlung mit einer mittleren Leistung von wenigstens 40mW, insbesondere wenigstens 100mW, im Speziellen mit wenigstens 250mW emittiert. Vorzugsweise ist die Strahlungsquelle ausgebildet zur Erzeugung von Messstrahlung mit einer Signalmodulation. Dabei werden unter anderem Modulationsformen verwendet wie sie aus der Telekommunikation bekannt sind. Beispiele für eine erfindungsgemässe Signalmodulation sind Burst-Modulation oder Frequenzmodulation.

In einer speziellen Fortbildung des erfindungsgemässen Vermessungsgeräts ist die Strahlungsquelle ausgebildet zur Erzeugung von Messstrahlung als Dauerstrich (continuous wave), d.h. zur Erzeugung nicht-gepulster Strahlung. Dabei wird unter Dauerstrichstrahlung eine Messstrahlung verstanden, die kontinuierlich wenigstens über einen Zeitraum von 0,4ms ausgestrahlt wird. Entsprechend wird unter der mittleren Leistung der emittierten Messstrahlung die über wenigstens diesen Zeitraum (also 400 Mikrosekunden) gemittelte Leistung verstanden.

Generell, also unabhängig vom Vorliegen eines Dauerstrichbetriebs, wird im Rahmen der vorliegenden Erfindung unter mittlerer Leistung diejenige Leistung verstanden, die mit einem "langsamen" Leistungsmessgerät gemessen wird bzw. werden würde, das also z.B. bei einem Vermessungsgerät mit gepulster Messstrahlung einer Pulsdauer oder Pulsfolge nicht folgen kann und somit zeitlich nicht auflöst. D.h. die Leistung eines einzelnen Impulses oder die Spitzenleistung muss je nach Pulsdauer bzw. Pulsfolge sehr viel höher sein, um die leistungslosen Ruhezeiten auszugleichen und so die Mindestleistung von wenigstens 14mW im Mittel zu erreichen. Die zeitliche Mittelung erfolgt dabei z.B. über wenigstens 0,25s, 1s oder 10s.

Für Vermessungsgeräte, insbesondere Laserscanner und Laserprofiler, die keine Einzelpunktmessungen mit im Grunde statischer Emissionsrichtung der Messstrahlung vornehmen (keine "point-to-point measurements"), sondern die die Messstrahlung schnell verschwenkend in den freien Raum emittieren (so schnell, dass dessen Bewegung mit dem Leistungsmessgerät nicht gefolgt werden kann) bedeutet dies, dass erfindungsgemäss die Leistung, die die Strahlungsquelle unmittelbar abgibt sehr viel höher als das Mittel von 14mW ist, damit die Leistung der emittierten Messstrahlung im Sinne der Erfindung im Mittel wenigstens 14mW beträgt, analog zur Leistung der Strahlungsquelle bei Abgabe eines Einzelimpulses einer Impulsfolge, die auch sehr viel höher ist als 14mW. Mit anderen Worten wird bei derartigen Vermessungsgeräten die Leistung räumlich verteilt, die Nominalleistung der Strahlungsquelle oder des Messstrahls ist als auf eine Kreis- oder Ringfläche verteilt anzusehen (bei Verschwenken um eine Achse), so dass als Leistung im Sinne der vorliegenden Erfindung der Bruchteil dieser Nominalleistung anzusehen ist, der dem Bruchteil eines Flächenelements dieser Ringfläche entspricht. (Man könnte auch davon sprechen, dass bei einem derartigen Vermessungsgerät im Verständnis der vorliegenden Erfindung ein Messstrahl mit einer Divergenz, die dem Scanwinkel, wie z.B. von 360°, entspricht, vorliegt.) Deshalb ist bei solchen scannenden, flächenhaft messenden Geräten erfindungsgemäss nicht die Leistung der Messstrahlung relevant, die bei gleich bleibender Emissionsrichtung, also beispielsweise bei einem fortwährend auf das Leistungsmessgerät ausgerichteten Messstrahl gemessen werden würde - was als eine räumliche Spitzenleistung zu verstehen ist - sondern diejenige Leistung mit einem rasch rotierendem Messstrahl (wie im tatsächlichen Messbetrieb), von dem an einem fixen Ort (also nicht der Schwenkbewegung folgenden) positionierten "langsamen" Leistungsmessgerät gemessen wird oder würde.

Anders formuliert ist erfindungsgemäss also nicht die optische Ausgangs- oder Spitzenleistung der Strahlungsquelle relevant, sondern diejenige Leistung, die an einem fixen Ort relativ zum Vermessungsgerät über eine oben genannte Mindestzeitdauer gemittelt empfangbar bzw. messbar ist oder wäre. D.h. Leistung der emittierten Messstrahlung im zeitlichen und räumlichen Mittel bedeutet erfindungsgemäss weder zeitliche noch räumliche Spitzenleistung, sondern die Leistung, die dem zeitlichen und räumlichen Mittel entspricht (wobei angemerkt sei, dass sich eine räumliche Mittelung im Sinne der vorliegenden Erfindung nicht auf eine etwaige räumliche Leistungsverteilung innerhalb des Messstrahls selbst bezieht, sondern auf ein etwaiges rasches Verschwenken des Messstrahls im Raum bezogen ist). Nur bei Dauerstrichbetrieb ohne Verschwenken ist der Wert dieses Mittels einfach gleich der Strahlleistung bzw. Strahlungsquellenausgangsleistung, bei Dauerstrichbetrieb mit Verschwenken ist dagegen räumlich zu mitteln (ein erfindungsgemässes zeitliches Mitteln ist nicht notwendig, da die Leistung zeitlich konstant ist, und entfällt deshalb), bei Pulsbetrieb ohne (rasches) Verschwenken ist nur zeitlich zu mitteln (ein erfindungsgemässes räumliches Mitteln ist nicht notwendig, da kein Verschwenken des Messstrahls im Raum erfolgt, und entfällt deshalb) und bei Pulsbetrieb mit Verschwenken ist sowohl zeitlich als auch räumlich zu mitteln. Bei Pulsbetrieb ist also um die Leistung im Sinne der Erfindung zu ermitteln die Leistung der einzelnen Pulse über den zeitlichen Mittelungszeitraum gleichmässig zu verteilen oder zu "verschmieren", so als ob zu jedem Zeitpunkt eine gleich bleibende Leistung vorläge (Leistung als Summe der Energie aller Pulse innerhalb des gesamten Zeitraums). Analog ist bei Schwenkbetrieb eines Laserscanners oder Laserprofilers die Leistung des einzelnen Messstrahls über die Fläche gleichmässig zu "verschmieren", so als ob zu einem bestimmten Zeitpunkt an jeder Stelle der Fläche oder jedem Flächenelement gleiche Leistung vorläge. Bei Pulsbetrieb kombiniert mit Schwenkbetrieb ist beides erforderlich um die Leistung im Mittel im Sinne der Erfindung zu erhalten.

Optional ist die Strahlungsquelle ausgebildet als Laserquelle, insbesondere als Laserdiode, im Speziellen als InGaAs- oder InGaAsP-Laserdiode. Alternativ ist die Strahlungsquelle als Superlumineszenz-LED (SLED) mit optischem Verstärker ausgebildet. Als weitere Alternative kann die Strahlungsquelle als Festkörperlaser ausgebildet sein, insbesondere als Nd:YVO4-Kristalllaser mit einer Wellenlänge von 1342nm.

In einer Fortbildung des erfindungsgemässen Vermessungsgeräts sind die optischen Mittel derart ausgebildet, dass die Messstrahlung als dekollimierter Messstrahl emittiert wird, also nicht-kollimierte, divergente Messstrahlung ausgesandt wird. Optional ist die Messstrahlung anhand der optischen Mittel um wenigstens eine Achse schwenkbar, z.B. durch einen Schwenkspiegel oder ein drehbares Prisma. Als weitere Option weist das Vermessungsgerät ein gemeinsames Objektiv zum Emittieren der Messstrahlung und zum Empfangen von vom Ziel reflektierter Messstrahlung auf. Als weitere Option sind die optischen Mittel auch für Licht im sichtbaren Bereich des optischen Spektrums im Wesentlichen durchlässig, d.h. dass die optischen Mittel zur Führung nicht nur von Messstrahlung der erfindungsgemässen Wellenlänge ausgebildet sind, sondern auch weitere Strahlung mit einer Wellenlänge im sichtbaren Bereich zu führen vermögen. Bevorzugt sind die optischen Mittel im Wesentlichen aus optischen Gläsern, insbesondere Silikatglas wie z.B. Borosilikat-Kronglas, Flintglas oder optischen Kunststoffen wie Polycarbonat (PC), oder Plexiglas (PMMA) gefertigt, wobei auch die Verwendung vonCyclo-Olefin Copolymer (COC,COP) denkbar ist.

Als weitere Alternative weist das Vermessungsgerät einen optischen Frequenzwandler, insbesondere Frequenzverdoppler, auf, wodurch ein Anteil von höchstens 25%, insbesondere höchstens 10%, im Speziellen höchstens 2,5%, der Messstrahlung in eine zweite Wellenlänge konvertierbar ist, welche niedriger, insbesondere halb so gross ist wie die erste Wellenlänge, so dass, vorzugsweise simultan, zusätzlich Strahlung der zweiten Wellenlänge emittierbar ist, insbesondere wobei die zweite Wellenlänge im roten Spektralbereich, im Speziellen zwischen 645nm und 680nm, liegt. Besonders in solchen Ausführungsformen sind wie genannt die optischen Mittel auch zur Führung von sichtbarer Strahlung ausgebildet.

Optional ist das Vermessungsgerät zur Vermessung natürlicher, nicht-kooperativer Ziele und Oberflächen ausgebildet. Als weitere Option ist der Sensor für Messgenauigkeiten im Sub-Millimeter- und/oder Sub-Picosekundenbereich ausgebildet. In einer weiteren Fortbildung weist das Vermessungsgerät ein um eine Basis verschwenkbares Oberteil auf, wobei das Oberteil die Strahlungsquelle aufweist, so dass also durch Verschwenken des Oberteils die Richtung der Messstrahlung gegenüber der Basis, insbesondere in der Horizontalen, verschwenkbar ist.

In optionalen Ausbildungsformen ist das Vermessungsgerät jeweils ausgebildet als handhaltbares Laser-Distanzmessgerät, luftgestützter Laserscanner oder Laserprofiler (Lidar), terrestrischer Laserscanner (TLS) oder Laserprofiler mittlerer oder grosser Reichweite, oder Laser-Totalstation (TPS).

In einer weiteren Fortbildung weist das Vermessungsgerät ein Waveform-Digitizing-Modul oder ein Frequency-Modulated-Continuous-Wave-Modul auf. Optional weist das Vermessungsgerät weiter einen optischen Mischer auf, der zur Durchführung eines homodynen oder heterodynen Mischverfahrens ausgebildet ist.

Die vorliegende Erfindung betrifft ausserdem ein opto-elektronisches Messverfahren für ein opto-elektronisches Vermessungsgerät nach Anspruch 1 zur Bestimmung wenigstens einer Distanz und/oder Position. Das Messverfahren beinhaltet die Schritte:

- Emittieren der Messstrahlung auf ein zu vermessendes Ziel,
- Empfangen wenigstens eines Teils der vom Ziel reflektierten Messstrahlung,
- Bestimmen der Distanz und/oder Position mittels der empfangenen Messstrahlung,

wobei die Messstrahlung mit einer ersten Wellenlänge im Nahinfrarotbereich zwischen 1210nm und 1400nm und einer mittleren Leistung von wenigstens 14mW emittiert wird. Optional liegt die erste Wellenlänge im Bereich zwischen 1280nm und 1320 nm, im Speziellen zwischen 1290nm und 1310nm. Alternativ liegt die erste Wellenlänge im Bereich zwischen 1320nm und 1400 nm, im Speziellen zwischen 1335nm und 1345nm. Als weitere Option wird die Messstrahlung mit einer Leistung im Mittel von wenigstens 40mW, im Speziellen wenigstens 100mW emittiert.

In einer Fortbildung des erfindungsgemässen Messsverfahrens erfolgt das Bestimmen der Distanz nach dem Waveform-Digitizing-Verfahren, dem Phasendifferenzverfahren, dem Schwellwertverfahren oder dem Fizeau-Verfahren. Alternativ oder zusätzlich erfolgt das Bestimmen der Position nach der Schwerpunktsauswertung, Korrelationsauswertung oder Maximumlikelyhood-Schärtverfahren. Die vorliegende Erfindung ermöglicht aufgrund der gewählten Wellenlänge und der vergleichsweise hohen Leistung der Messstrahlung den Einsatz des Phasendifferenzverfahrens und auch des Schwellwertverfahrens in Anwendungsbereichen, bei denen dies mit Verfahren bzw. Vorrichtungen des Stands der Technik nicht möglich ist. Z.B. ist die erfasste reflektierte Messstrahlung mit bekannten Vermessungsgeräten bei Messungen zu weit entfernten Zielen, d.h. grossen Messreichweiten, oder auf schwach reflektierende Ziele zu gering, um das Phasendifferenzverfahren bzw. die Schwellwertmethode verwenden zu können. Gerade auch bei Verwendung des Phasendifferenzverfahrens bietet die vorliegende Erfindung die Vorteile einer erhöhten Reichweite, schnelleren Messrate und präziseren Messung, auch auf vergleichsweise dunkle Ziele. Mit einem durch ein Heterodynverfahren implementierten Aufsummieren von sehr vielen Impulsen ermöglicht das Phasendifferenzverfahren sehr hohe Präzision (sehr geringes Distanzjitter von weniger als 100µm). Bei Verwendung der Schwellwertmethode bietet die vorliegende Erfindung weitere Kostenvorteile, da es sich bei der Schwellwertmethode um eine vergleichsweise günstige Messmethode handelt. Zudem bietet diese Methode, z.B. im Gegensatz zu Impulsmittelung, die zu Kontur- oder Kantenverschmierung führt, Vorteile bei der Auflösung der Position bei einem scannenden Messen, bei dem die Messstrahlung sehr rasch verschwenkt wird.

Als weitere Option wird die Messstrahlung moduliert mittels Impulsmodulation, Intervallmodulation, Doppelimpuls-Intervallmodulation, Amplitudenmodulation, Frequenzmodulation, Burst-Modulation, Polarisationsmodulation oder Wellenlängenmodulation.

Als weitere Option weist die Messstrahlung wenigstens zwei Wellenlängen auf und für jede Wellenlänge wird eine Signalamplitude der empfangenen Messstrahlung bestimmt. Die Messstrahlung wird also in dieser Fortbildung des erfindungsgemässen Verfahrens nicht nur in einer Wellenlänge emittiert, sondern mit wenigstens zwei Wellenlängen, wobei wenigstens eine der, vorzugsweise alle, Wellenlängen erfindungsgemäss im Bereich zwischen 1210nm und 1400nm liegt. Zudem wird die empfangene Messstrahlung hinsichtlich ihrer Amplitude ausgewertet, so dass die für wenigstens zwei Wellenlängen eine Intensität ermittelt ist. Vorzugsweise weist die Messstrahlung eine Vielzahl von Wellenlängen auf, z.B. 10, 50, 100 oder 250 verschiedene, vorzugsweise nah beieinander liegende Wellenlängen oder Spektralbänder, und es erfolgt eine hyperspektrale Intensitätsmessung. Somit ist mit dem erfindungsgemässen Verfahren z.B. eine spektrale Signatur eines zu vermessenden Objekts bestimmbar.

Die vorliegende Erfindung beinhaltet des Weiteren ein Computerprogrammprodukt oder Computer-Datensignal, verkörpert durch eine elektromagnetische Welle, mit Programmcode, zur Steuerung bzw. Durchführung des erfindungsgemässen Verfahrens, insbesondere wenn das Programm in einer Steuer- und Auswerteeinheit eines erfindungsgemässen Vermessungsgeräts ausgeführt wird.

Das erfindungsgemässe Vermessungsgerät und das erfindungsgemässe Verfahren werden nachfolgend anhand von den in den Zeichnungen schematisch dargestellten Ausführungen und Anwendungsvorgängen näher beschrieben.

Im Einzelnen zeigen

Fig.1      Solares Spektrum am Erdboden mit atmosphärischen Absorptionsbanden in Abhängigkeit der Wellenlänge,

Fig.2      spektraler Transmissionsgrad des menschlichen Auges von der Linse bis zur Netzhaut in Abhängigkeit der Wellenlänge,

Fig.3a-d   die atmosphärische Transmission in Abhängigkeit der Wellenlänge für eine definierte Messstrecke und die empfangene Messstrahlungsleistung in Abhängigkeit der Messstrecke,

Fig.4      die Reflektivität verschiedener Materialien in Abhängigkeit der Wellenlänge,

Fig.5      ein elektronischer Distanzmesser als ein erstes Ausführungsbeispiel eines erfindungsgemässen Vermessungsgeräts,

Fig.6a,b   eine Scaneinheit als Teil eines zweiten Ausführungsbeispiel eines erfindungsgemässen Vermessungsgeräts,

Fig.7a,b   eine Totalstation als ein weiteres Ausführungsbeispiel eines erfindungsgemässen Vermessungsgeräts,

Fig.8a-c   ein Lasertracker als ein weiteres Ausführungsbeispiel eines erfindungsgemässen Vermessungsgeräts,

Fig.9      die Reflektivität einer Kupferbeschichtung in Abhängigkeit der Wellenlänge,

Fig.10     eine schematisches Darstellung für eine Abweichung des Messstrahlauftreffpunkts, und

Fig.11     eine schematisches Beispiel für eine Interferometer-Einheit für ein frequenzkammunterstütztes Messen.

Fig.1 zeigt die solare Globalstrahlung, die auf dem Erdboden (in Meereshöhe) auftrifft in Abhängigkeit der Wellenlänge. Das Maximum der Globalstrahlung liegt im sichtbaren Bereich des Strahlungsspektrums und fällt zum Nahinfrarotbereich hin ab. D.h. für Vermessungen im Freien ist Messstrahlung mit Wellenlängen im Nahinfrarotbereich ab ca. einer Wellenlänge 1150nm um wenigstens einen Faktor 3 kleiner als bei 550nm. Zudem befindet sich zwischen 1150nm und 1350nm ein atmosphärisches Fenster mit hoher optischer Transmission. Erfindungsgemäss sind die Strahlungsquellen in diesem Spektralbereich wesentlich vorteilhafter als Messstrahlung im sichtbaren Bereich, z.B. mit den bekannten Wellenlängen 532nm, 635nm, aber auch dem daran angrenzenden Bereich des IR-Spektrums, z.B. 1064nm, da in diesem Bereich der störende Einfluss der natürlichen Fremdstrahlung bzw. Hintergrundstrahlung wesentlich geringer ist. Insbesondere im Wellenlängenbereich von 1320nm bis 1400nm ist die Globalstrahlung besonders niedrig. Der Grund dafür ist die hohe Strahlungsabsorption der Wasser- und Kohlenstoffdioxidmoleküle in der Luft. Solche Absorptionsbanden schirmen die solare Strahlung ab, haben aber den Nachteil, dass das Nutzlicht von opto-elektronischen Vermessungsgeräten ebenfalls stark reduziert wird, zumindest bei Distanzen grösser als 100m. Bei kurzen Distanzen bis zu einigen zehn Metern hingegen ist die Signalabschwächung unbedeutend und bei ausreichend grosser Sendeleistung resultiert ein wesentlich besseres Signal-Rausch-Verhältnis als in den sichtbaren und den nahen infrarot Bereichen. Der Wellenlängenbereich 1320-1400nm ist daher vorteilhaft für opto-elektronische Kurzdistanzsensoren. Für Langdistanzsensoren wie Laser-Theodolite und geodätische Totalstationen hingegen ist der Wellenlängenbereich des atmosphärischen Fensters zwischen 1170-1310nm vorteilhaft. Dieser Bereich zeichnet sich aus durch eine niedrige solare Globalstrahlung und eine hohe spektrale Transmission der Atmosphäre. Somit ist durch die vorliegende Erfindung ein wesentlich besseres Signal-Rausch-Verhältnis im Hinblick auf die Hintergrundstrahlung und damit ein grössere Messgenauigkeit, höhere Messgeschwindigkeit und/oder Messreichweite ohne zusätzlichen Aufwand, z.B. bei der Signalauswertung, erzielbar als bei Vermessungsgeräten nach dem Stand der Technik.

Figur 2 zeigt die Transmissivität (Durchlässigkeit) des menschlichen Auges bis zur Netzhaut in Abhängigkeit der Wellenlänge für den Wellenlängenbereich von 350nm bis 1400nm. Diese entspricht im Wesentlichen am langwelligen Ende des dargestellten Spektrums dem Transmissionsverhalten von circa 2cm Wasser. Ab einer Wellenlänge von 1150nm nimmt die Durchlässigkeit rapide ab und liegt zwischen 1320nm und 1400nm unterhalb von ca. 10%. D.h. dass für Wellenlängen in diesem Bereich ist die Gefahr einer Schädigung des menschlichen Auges durch die Messstrahlung sehr gering. Im Gegensatz dazu weist Messstrahlung einer geringeren Wellenlänge, besonders im sichtbaren Bereich, aber z.B. auch der Wellenlänge 1064nm, ein erheblich höheres Gefährdungspotential auf, so dass die Messstrahlung nur mit sehr geringer Leistung von beispielsweise 1mW emittiert werden kann, um als augensicher zu gelten. Messstrahlung im UV-Bereich wiederum dringt zwar ebenfalls nicht bis zur Netzhaut vor, kann aber die Hornhaut schädigen, weshalb hier die festgelegten Lasersicherheits-Grenzwerte ebenfalls wesentlich niedriger sind als für den erfindungsgemässen Wellenlängenbereich. Ähnlich gilt dies für Messstrahlung mit einer Wellenlänge grösser als 1400nm, insbesondere der aus dem Stand der Technik bekannten Vorrichtungen mit einer Wellenlänge von 1550nm. Auch hier liegen die festgelegten Lasersicherheits-Grenzwerte deutlich unterhalb derjenigen für den Wellenlängenbereich von 1200nm-1400nm, d.h. die maximal erlaubte Strahlungsleistung ist für Wellenlänge oberhalb von 1400nm wesentlich geringer. Wie aus Figur 2 ersichtlich, ist bei erfindungsgemässen Vermessungsgeräten mit einer Wellenlänge zwischen 1320nm und 1400nm die Durchlässigkeit besonders niedrig. Die festgelegten Grenzwerte sind in diesem Wellenlängenbereich besonders hoch, was vorteilhaft besonders hohe Strahlungsleistungen erlaubt, z.B. beträgt optional die mittlere Leistung der Messstrahlung mindestens 40mW, mindestens 90mW oder mindestens 250mW. Die Erfindung bietet also den Vorteil, dass Messstrahlung mit wesentlich höherer Leistung emittierbar ist als bei Vorrichtungen nach dem Stand der Technik ohne dass besondere Schutzvorkehrungen getroffen werden müssen.

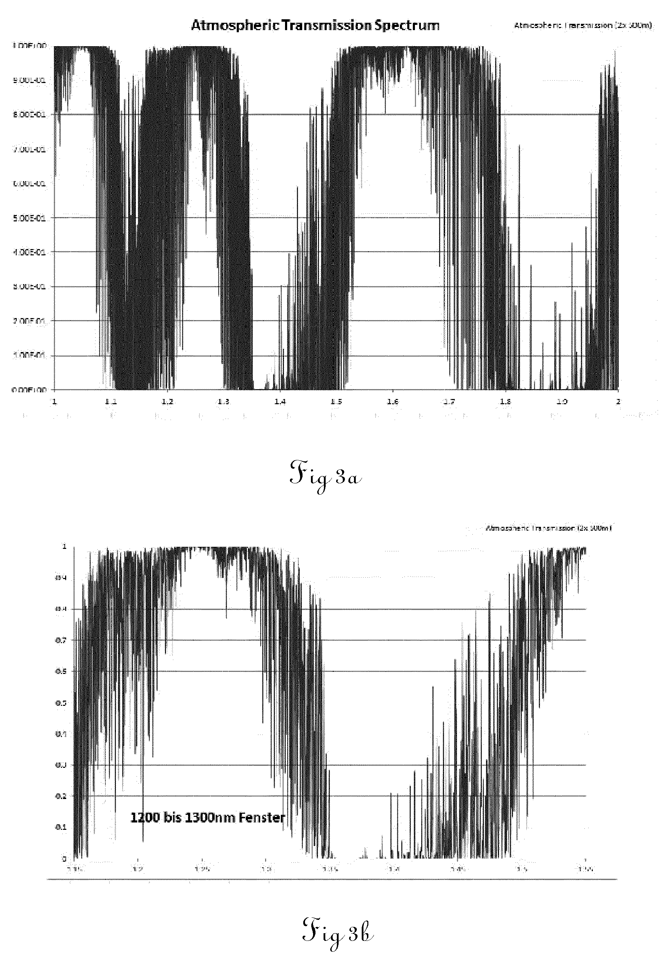

Fig. 3a zeigt die spektrale Transmissivität (Durchlässigkeit) für eine terrestrische Atmosphäre mit natürlichem Feuchtegehalt in Abhängigkeit der Wellenlänge für einen Wellenlängenbereich von 1μm bis 2μm, also 1000nm bis 2000nm, und eine Lichtwegstrecke von 1000m bzw. Messstrecke von 500m. Zu erkennen sind drei Spektralbereiche mit grosser Durchlässigkeit, die auch als Transmissionsfenster bezeichnet werden. Der erste erfindungsgemässe Wellenlängenbereich liegt im Bereich des 1.25μm-Fensters (1170nm-1320nm) und bietet deshalb den Vorteil, dass die Messstrahlung auch bei mittleren oder grossen Entfernungen zum Ziel kaum oder relativ wenig durch die Atmosphäre geschwächt wird. Mit anderen Worten ist also in diesem Bereich der atmosphärische Transmissionskoeffizient hoch bzw. sogar gegen 1. Da bei erfindungsgemässen Vermessungsgeräten die Messstrahlung vom Gerät selbst empfangen wird, beträgt die Messstrecke die doppelte Distanz zum Ziel, so dass insbesondere bei mittleren und grossen Messdistanzen, also für Entfernungen wesentlich grösser als 100m Entfernung zum Ziel, ein hoher atmosphärischer Transmissionskoeffizient besonders von Vorteil ist. Der zweite erfindungsgemässe Wellenlängenbereich umfasst den Bereich 1320nm bis 1400nm und deckt den Bereich mit hoher Absorption ab. Dieser Bereich ist für Kurzdistanzanwendungen kleiner als 25m besonders geeignet, da die Messstrahlung bei kurzen Distanzen aufgrund des Beer 'schen Exponentialgesetztes radiometrisch nicht wesentlich reduziert wird und zudem keine Störung durch Sonnenlicht vorliegt. Die Globalstrahlung dringt bei diesen Wellenlängen kaum bis zum Erdboden durch, die Shot-Noise erzeugende Umgebungshelligkeit ist auch bei Tag vernachlässigbar klein.

Figur 3b zeigt die Transmission für den Wellenlängenbereich von 1,15μm bis 1,55μm, also 1150-1550nm, für eine grosse Messstrecke von 1km. Dabei beträgt der atmosphärische Transmissionskoeffizient im Wellenlängenbereich von 1210-1310nm über 70% und ist zwischen etwa 1230nm und 1280nm zumindest annähernd maximal, also annähernd gleich 100%, weswegen diese Wellenlängenbereiche besonders für mittlere und grosse Messdistanzen von Vorteil sind. Für diesen Spektralbereich von 1210-1310nm mit hoher Transmission ist ein erfindungsgemässes Vermessungsgerät mit Laserdioden aus dem Telekombereich bestückbar. Diese Telekom-Laserdioden emittieren bei 1250 bis 1350nm, und werden sonst verwendet für die 1,3um-Lichtleiternetzwerke mit niedriger Modendispersion.

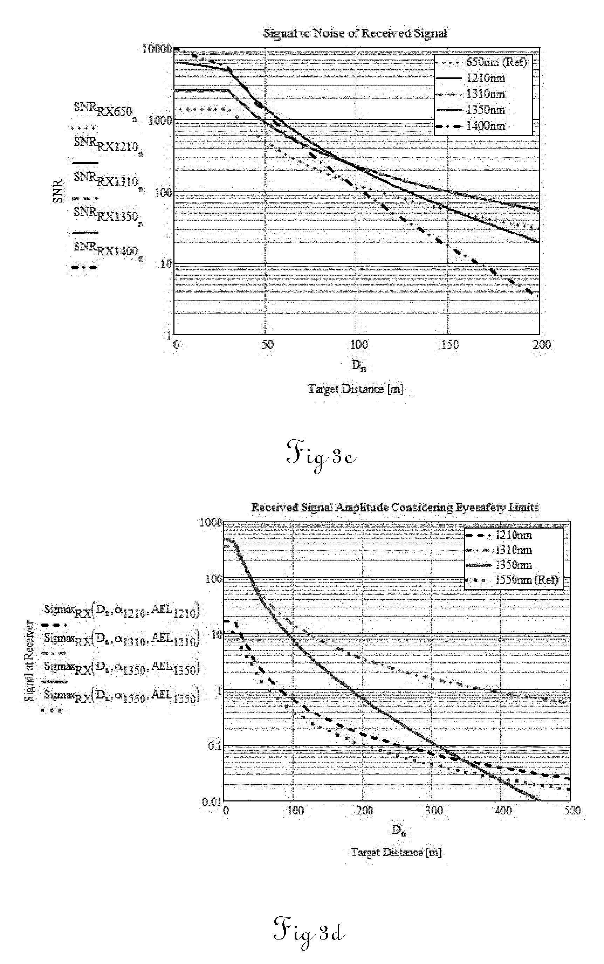

Figur 3c verdeutlicht diesen Vorteil weiter. Die Figur zeigt als Qualitätsmass für das empfangene Signal das Signal-Rauschverhältnis (SNR), abgeleitet aus der empfangenen Messstrahlungsleistung und des Rauschbeitrags des empfangenen solaren Umgebungslichts, in Abhängigkeit der Entfernung zum Ziel für die zwei erfindungsgemässen Wellenlängenbereiche 1210-1310nm und 1350-1400nm. Die Wellenlängen von 1210nm (durchgezogene Linie) bis 1310nm (gestrichelte Linie) sind im Bereich des atmosphärischen Fensters mit hoher Transmission und liegen übereinander. Das zu erwartende SNR liegt dabei um einen Faktor 2 über demjenigen SNR bei der gebräuchlichen Wellenlänge von 650nm. Wellenlängen grösser als 1320nm, die im atmosphärischen Absorptionsbereich liegen, weisen bei kurzen Distanzen ein noch höheres SNR aus. Beispielsweise die Wellenlänge bei 1350 (hellgraue durchgezogene Linie) ist im Vorteil gegenüber der Referenzwellenlänge 650nm zwischen 0 und 150m und die Wellenlänge 1400nm (Punkt-Strich-Linie) weist das beste SNR im Nahbereich bis ca. 40m aus. Die Leistung der emittierten Messstrahlung ist bei allen fünf Wellenlängen gleich. Aufgrund der sehr hohen atmosphärischen Transmission zwischen 1210nm und 1310nm ist der zugehörige Pegel des Empfangssignals bei diesen Wellenlängen am höchsten. Diese Wellenlängen bieten einen wesentlichen Vorteil bei Distanzen grösser als 200m und ermöglichen im Gegensatz zu den anderen Wellenlängen Messreichweiten von weit über einen Kilometer bis über 10 Kilometer, dies nicht nur bei Nacht sondern auch bei Tag, da die solare Globalstrahlung praktisch vernachlässigbar ist.

Figur 3d zeigt als Mass für die empfangene Messstrahlungsleistung die Amplitude des Empfangssignals des Sensors in Abhängigkeit der Entfernung zum Ziel für zwei erfindungsgemässe Wellenlängen von 1210nm (gestrichelte Linie) und 1310nm (Punkt-Strich-Linie) im atmosphärischen Transmissionsfenster, eine weitere erfindungsgemässe Wellenlänge von 1350nm (durchzogene Linie) im atmosphärischen Absorptionsband und als Vergleich dazu für die von Faserlasern und Faserverstärkern her bekannte Wellenlänge von 1550nm (durchgezogene Linie). Im Unterschied zur Figur 3c sind die Graphen nun jeweils bezogen auf eine Leistung der emittierten Messstrahlung, die sich auf die maximal zulässige Leistung nach den festgelegten Grenzwerten der Augensicherheit bezieht. Bei der bekannten Wellenlänge 1550nm beträgt diese mehr als eine Grössenordnung weniger als bei den erfindungsgemässen Wellenlängen von 1310nm und 1350nm. Die höchste Ausgangsleistung (500mW) liegt bei einer Wellenlänge von 1350nm vor, wohingegen bei einer Wellenlänge von 1300nm mit einer Leistung von etwa 200mW emittiert wird. Aufgrund der höheren Ausgangsleistung ergibt sich bei einer Wellenlänge von 1350nm trotz der höheren atmosphärischen Abschwächung eine sehr hohe Empfangssignalamplitude bei kurzen Distanzen zum Ziel bis etwa 300m. Somit bietet die Verwendung einer Wellenlänge im Bereich von 1310nm bis 1400nm Vorteile für Vermessungsgeräte bzw. Vermessungen für Kurzdistanzen. Im Vergleich zu Vermessungsgeräten aus dem Stand der Technik, z.B. mit der dargestellten Wellenlänge von 1550nm, bietet dieser Wellenlängenbereich aber auch noch für mittlere Messdistanzen bis etwa 400m noch Vorteile. Umgekehrt ist der erfindungsgemässe Wellenlängenbereich zwischen 1210nm und 1310nm vorteilhaft besonders für mittlere bis lange Messstrecken, da der atmosphärische Transmissionskoeffizient wie beschrieben in diesem Wellenlängenbereich besonders hoch ist, so dass ein sehr hohes Empfangssignal bzw. eine sehr hohe Messstrahlungsleistung empfangen werden kann. Aufgrund der höheren zulässigen Ausgangsleistung bieten Vermessungsgeräte mit dieser Wellenlänge bzw. einer Wellenlänge im Bereich von 1280nm und 1320nm aber im Vergleich zu den bekannten Wellenlängen (z.B. 1550nm) auch bereits bei kurzen Messstrecken Vorteile.

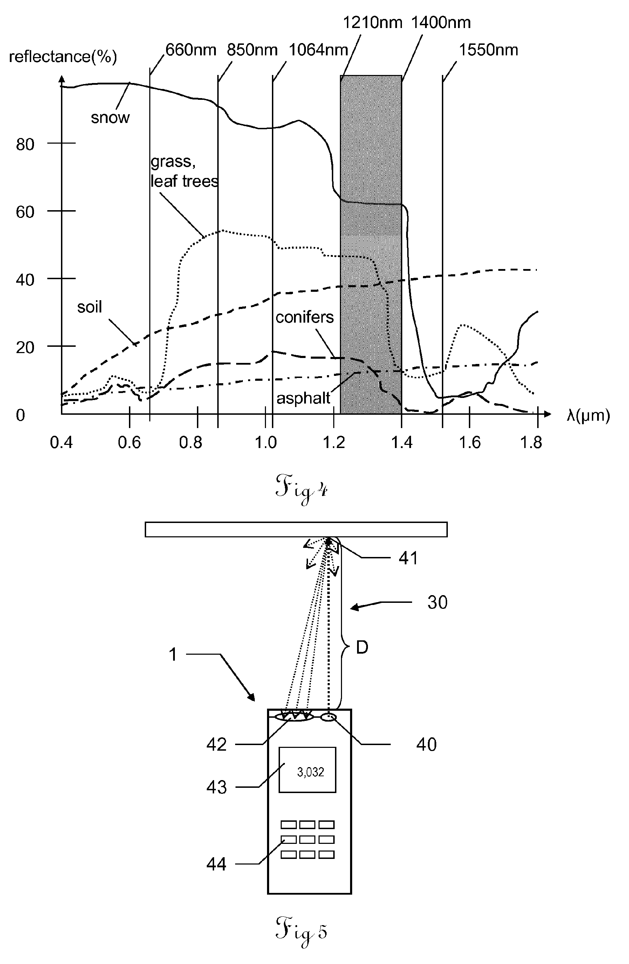

Figur 4 stellt die Reflektivität einiger natürlicher Materialien bzw. Objekte wie Bodenbewuchs in Abhängigkeit der Wellenlänge der Messstrahlung dar, und zwar im Wellenlängenbereich von 400nm bis 1800nm für Schnee (durchgezogene Linie), Gras oder Laubbäume (gepunktete Linie), Nadelbäume (langgestrichelte Linie), trockene Erde (kurzgestrichelte Linie) und Asphalt (Linie mit Punkt-Strichen). Die Graphen stellen dabei nur ungefähre, grobe Werte dar, um die Wellenlängenabhängigkeit des Reflexionsvermögens verschiedener Objekte eher qualitativ zu illustrieren. Ausserdem sind beispielhaft vier aus dem Stand der Technik bekannten Vermessungswellenlängen 660nm, 850nm, 1064nm und 1550nm grob eingezeichnet und der Wellenlängenbereich zwischen 1210nm und 1400nm, wie er erfindungsgemäss Verwendung findet. Gut ersichtlich ist die bei den meisten Materialien mit der Wellenlänge zunehmende Reflektivität. Insbesondere reflektieren Vegetationsobjekte besonders hoch im Bereich zwischen 1000nm und 1400nm. Aber auch Asphalt, Beton und natürliche Böden wie Sand- oder Lehmböden weisen eine Reflexionssignatur mit erhöhten Reflektivitätswerten aus. Messvorrichtungen, welche solche Objekte bei Wellenlängen im Bereich von 1300nm anmessen, sind bezüglich Signalstärke im Vorteil. Man erkennt, dass besonders die gebräuchlichen Wellenlängen kürzer als 900nm in Bezug auf die Reflektivität und damit die zurückgestrahlte Leistung der Messstrahlung Nachteile haben. In Bezug auf Materialien wie Asphalt oder Erde sind die relativ kurzen Wellenlängen des sichtbaren und daran anschliessenden Bereichs nachteilig, da die Reflektivität der hier betrachteten Oberflächen mit der Wellenlänge zunimmt. Die Verwendung der Wellenlänge 660nm (oder kleiner) ist nachteilig bei Vermessung auf pflanzenbedeckte Oberflächen, da Wiesen und Wälder (sowohl Laub- als auch Nadelwälder) dort nur sehr wenig Licht reflektieren. Dies gilt ebenso für Wellenlängen im IR-B-Bereich, wozu die Wellenlänge 1550nm zählt. Diese Wellenlänge ist ebenso nachteilig bei Vermessung auf schnee- oder eisbedeckte Oberflächen, da diese nur bis ca. 1400nm eine hohe Reflektivität aufweisen, um dann zu sehr geringen Werten abzufallen. Die Stärke der Reflektivität wirkt sich besonders auf die maximal erreichbare Messreichweite aus, da bei einer geringen Reflektivität die Messstrahlung derart abgeschwächt wird, dass die empfangene Messstrahlung ab einer gewissen Messstrecke nicht mehr vom Rauschen unterscheidbar ist.

Im Gegensatz zu Vermessungsgeräten des Stands der Technik bietet die vorliegende Erfindung den Vorteil, dass bei allen dargestellten Materialien ein vergleichsweise gutes Reflexionsvermögen vorliegt und damit die Messstrahlung mit einem relativ hohen Anteil empfangbar ist. In Bezug auf Erde und Asphalt ist vorteilhaft, dass bei Wellenlängen ab 1210nm im Vergleich zu kürzeren Wellenlängen diese Materialien eine relativ hohe Reflektivität aufweisen. Beispielsweise liegt bei einer Wellenlänge von 1400nm eine etwa doppelt so hohe Reflektivität vor wie bei der Wellenlänge von 660nm. Im Vergleich zur noch längeren Wellenlänge 1550nm ist die Reflektivität zwar geringer, dieser Unterschied ist aber besonders für Wellenlängen zwischen 1320nm und 1400nm nur gering. Schnee zeigt beim erfindungsgemässen Wellenlängenbereich eine sehr hohe Reflektivität und in Bezug auf Ziele wie Gras oder Laubbäume ist speziell der Wellenlängenbereich zwischen 1210nm und 1400nm vorteilhaft. Dieser Vorteil gilt insbesondere im Vergleich zur Wellenlänge von 1550nm, bei der wie beschrieben das Reflexionsvermögen von Schnee und grünen Pflanzen sehr gering ist. Die vorliegende Erfindung bietet also den Vorteil, dass die verwendete Wellenlänge der Messstrahlung bei einer Vielzahl von Materialien bzw. Objekten eine gute Reflektivität aufweist, wodurch die reflektierte Messstrahlung eine vergleichsweise hohe Intensität erzielbare Messreichweite und eine hohe Messgenauigkeit auswirkt.

Eine Ausführungsform des erfindungsgemässen Vermessungsgeräts ist mit einer Sendeeinheit zur Emission einer Messstrahlung mit einer oder mehreren Wellenlängen zwischen 1210nm und 1310nm ausgerüstet. Dieses Gerät hat den Vorteil auf lange Distanzen mit hoher Präzision zu messen. Besonders der Wellenlängenbereich am langwelligen Ende des in Figur 3b beschriebenen atmosphärischen Fensters bei 1310nm zeichnet sich aus durch hohe Transmission, hohe Reflektivität der Vegetation, Erdböden, und steinartigen Oberflächen. Zudem lassen die Lasersicherheitsgrenzwerte vergleichbar hohe augensichere Sendeleistungen zu. Dadurch können möglichst viele Objekte mit hoher Genauigkeit angemessen werden.

Eine weitere Ausführungsform des erfinderischen Vermessungsgeräts ist mit einer Sendeeinheit bzw. Strahlungsquelle mit wenigstens einer Wellenlänge zwischen 1320nm und 1400nm ausgerüstet. Dieses Gerät hat den Vorteil, dass dank der vergleichsweise hohen möglichen Sendeleistungen aufgrund den entsprechend ausgelegten Lasersicherheitsgrenzwerten und der niedrigen solaren Einstrahlung bei kurzen Distanzen sehr präzise opto-elektronische Messungen zur Distanz- oder Richtungsbestimmung durchführbar sind.

Bei Verwendung von mehreren Wellenlängen erweitert sich das erfinderische Vermessungsgerät zu einem hyperspektralen Analyseinstrument. Bei mehr als einer Messwellenlänge lassen sich Materialien und Objekte auffinden, identifizieren und Rückschlüsse auf deren Zustand zu machen, insbesondere die Bestimmung des Gesundheitszustands von Vegetation. Ein Hyper- oder Multispektralinstrument würde vorzugsweise die Wellenlängen zwischen 1170nm und 1400nm abdecken, wobei wenigstens eine der Wellenlängen im erfindungsgemässen Bereich von 1210nm bis 1400nm liegt.

Figur 5 zeigt in Aussenansicht als Beispiel für ein erfindungsgemässes Vermessungsgerät 1 einen handhaltbaren elektronischen Distanzmesser zum Vermessen von Entfernungen. Insbesondere im Bereich der Bauinstallation oder Bauabnahme werden tragbare und in der Hand zu haltende Geräte verwendet, welche bezüglich einer zu vermessenden Struktur angelegt werden und dann eine Entfernungsmessung zu einer Oberfläche durchführen. Alternativ oder zusätzlich erfolgt eine Positionsmessung, vorzugsweise in Form einer Richtungsmessung zur Oberfläche als Richtung vom Vermessungsgerät zum Ziel 41 oder der Winkel zwischen der optischen Messachse und einer Nullachse des Vermessungsgeräts. Für solche Anwendungen geeignete und typische handhaltbare Entfernungsmessgeräte werden beispielsweise in der EP 0 738 899, der WO2015073548 und der EP 0 701 702 beschrieben. Der Distanzmesser weist ein Gehäuse auf, in dem die notwendigen elektronischen Komponenten angeordnet sind. Das Gehäuse ist dabei so ausgebildet, dass das Vermessungsgerät 1 in der Hand gehalten und auch an einem zu vermessenden Ziel 41 definiert angelegt oder angeschlagen werden kann. Das Vermessungsgerät 1 beinhaltet an seiner Vorderseite eine Laserstrahlungsquelle 40 und eine Laserempfangseinheit 42, die über optische Öffnungen im Gehäuse verfügen. Auf der Oberseite des Geräts befinden sich eine Anzeigevorrichtung 43 in Form eines Displays und Eingabemittel 44 in Form eines Tastenfeldes. Ausserdem kann eine - hier nicht dargestellte - Kamera zur Richtungsbestimmung mittels Aufnahme von Bildern in Richtung der Emissionsrichtung vorgesehen sein.

Erfindungsgemäss sendet die Laserstrahlungsquelle 40 Messstrahlung 30 wenigstens einer Wellenlänge im Bereich zwischen 1210nm und 1400nm mit einer Leistung von mindestens 14mW in den freien Raum zu einem Ziel 41 z.B. auf einer Wand aus, d.h. die in Richtung zum Ziel 41 emittierte Messstrahlung 30 weist eine zeitlich und räumlich mittlere Leistung von wenigstens 14mW auf. Die Wand weist eine natürliche raue Oberfläche auf, von der optische Strahlen streuend reflektiert werden. Ein Teil der gestreut reflektierten Messstrahlen 30 wird von der Laserempfangseinheit 42 eingesammelt, von einem (nicht dargestellten) Sensor des Vermessungsgeräts 1 detektiert und in ein elektrisches Signal umgewandelt. Das Signal wird in an sich bekannter Weise zum Bestimmen des digitalen Werts der Distanz D zum Ziel 41 von einer elektronischen Schaltung ausgewertet. Aufgrund der vorteilhaften Eigenschaften der erfindungsgemässen Wellenlänge und der vergleichsweise hohen Leistung der emittierten Messstrahlung 30 ist dabei der Signalpegel im Vergleich zu Messgeräten des Stands der Technik hoch, was zu einer vorteilhaft hohen Präzision des bestimmen Distanzwerts und/oder hohen Messreichweite führt, also eine Distanzbestimmung auch zu weit entfernten Zielen 41 ermöglicht, dies insbesondere auch bei sonnenbeschienen Oberflächen. Dank einem guten Signal-Rauschverhältnis sind auch hohe Messgeschwindigkeiten im Kilo- und Megahertzbereich möglich, die Objekte können daher mit einer repetitiven Messung (Tracking Mode) wiederholt angemessen oder gescannt werden. Zur Entfernungsermittlung wird z. B. Phasen- oder Laufzeitmessung eingesetzt. Der durch die Auswertung digital bestimmte Wert der gemessenen Entfernung D - von hier beispielsweise 3,032 Metern - wird dann auf dem Display 43 einem Benutzer zur Verfügung gestellt.

Das erfindungsgemässe Vermessungsgerät ist optional als terrestrischer oder luftgestützter Laserscanner oder Laserprofiler ausgebildet, die jeweils die räumliche Position (2D- oder 3D-Koordinaten) eines Oberflächenpunktes erfassen, indem durch den Laser die Entfernung zum angezielten Oberflächenpunkt gemessen und diese Messung mit den oder der Winkelinformationen der Laseremission verknüpft werden. Aus diesen Entfernungs- und Winkelinformationen kann die räumliche Lage des erfassten Punktes bestimmt und die Oberfläche fortlaufend vermessen werden, indem der Laserstrahl fortlaufend verschwenkt wird. Heutzutage werden Laserscanner, oder die einfachere Form des Profilers, auch auf Rucksäcken, Handwagen (Trolleys), Kraftfahrzeugen (vehicle based scanning, VBS) oder unbemannten Fluggeräten (unmanned aerial vehicle, UAV) verwendet, um Objekte dreidimensional zu vermessen und beispielsweise virtuell als Punktwolken darzustellen.

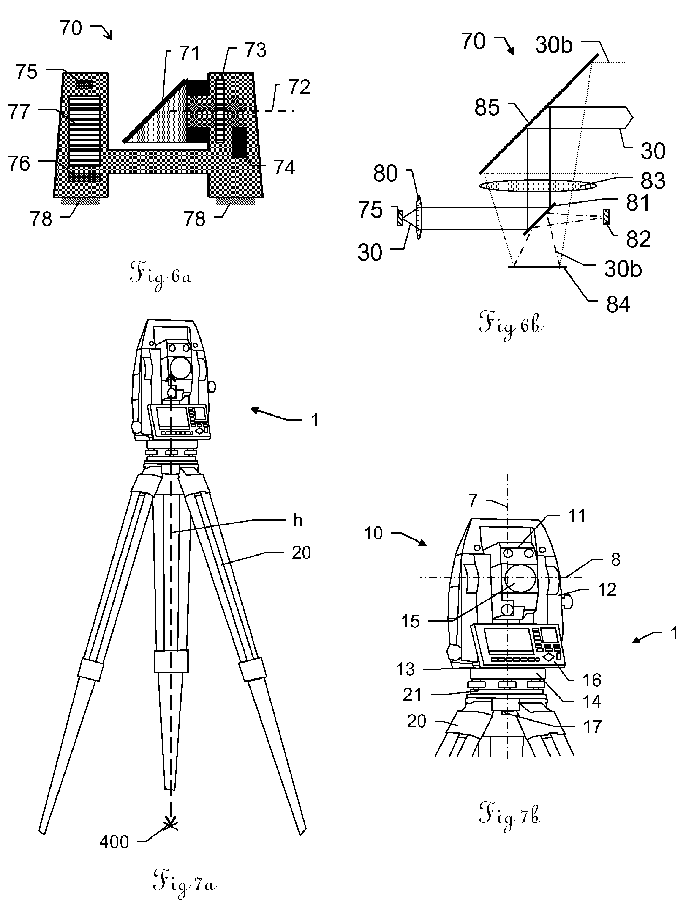

Die Figur 6a zeigt als Ausschnitt eines solchen Vermessungsgeräts das zugehörige Scanmodul 70. Dieses Scanmodul kann Bestandteil eines einachsigen Scanners (auch Profiler genannt) sein. Das Scanmodul 70 kann aber auch über eine Befestigungsvorrichtung 78 auf einer Schwenkvorrichtung, z.B. einer mit einer zweiten Drehachse verschwenkbaren Basis, montiert sein. Der Scanner weist einen Spiegel 71 als Umlenkelement auf, welcher um eine erste Achse 72 rotierbar ist, wobei die Rotation durch einen Motor 74 bewirkt und ein Rotationswinkel mit einem Winkelmesssensor 73 erfasst werden kann. Zudem ist das Modul 70 mit einer Strahlungsquelle 75, insbesondere einer Laserdiode oder einem Faserlaser, zur Emission von Messstrahlung und mit einer Empfangseinheit zur Detektion reflektierter Messstrahlung, ausgestattet. Der emittierte Messstrahl kann über ein optisches Strahlführungselement 77 mit optischen Mitteln zur Führung der Messstrahlung auf den Rotationsspiegel 71 (als weiteres optisches Mittel) und von dort auf einen Mess- bzw. Zielpunkt ausgerichtet werden.

Wie aus dem Stand der Technik bekannt, erfolgt das Verschwenken oder Rotieren dabei über eine Achse über 360° derart schnell (z.B. werden üblicherweise zwischen etwa 100000 bis zu einer Million Messpunkte pro Sekunde erfasst), dass die Messstrahlungsleistung als über diesen Raum verteilt angesehen werden kann. D.h. die Leistung, die von der Strahlungsquelle im zeitlichen Mittel (also in einem Zeitraum, der um viele Grössenordnungen länger ist als die die Dauer eines Einzelpulses bei Pulsbetrieb bzw. die Dauer der Erfassung eines Messpunkts) abgegeben wird, wird im Falle eines als Scanner ausgebildeten Vermessungsgeräts räumlich "verschmiert". Deshalb ist erfindungsgemäss die von der Strahlungsquelle 75 abgegebene Strahlungsleistung im Falle eines solchen Vermessungsgeräts mit rasch verschwenktem Messstrahl 30 im Vergleich zu einem Vermessungsgerät mit räumlich ruhendem (oder nur langsam verschwenktem) Messstrahl 30 folgerichtig entsprechend höher gewählt, so dass die zugängliche Leistung der emittierten Messstrahlung 30 trotz der räumlichen Verteilung aufgrund des Verschwenkens des Messstrahls im Raum im Mittel wenigstens 14mW beträgt und damit auch im Falle eines scannenden, verschwenkenden Messens im zeitlichen und räumlichen Mittel eine im Vergleich zum Stand der Technik hohe emittierte und damit auch hohe empfangbare Messstrahlungsleistung zur Verfügung gestellt wird. Mit anderen Worten ist die Leistung immer so gewählt, dass über den Mittelungszeitraum, in dem mit einem Leistungsmessgerät die Bestimmung der mittleren Leistung erfolgt oder erfolgen würde, wenigstens eine mittlere Leistung von 14mW messbar ist oder wäre, unabhängig davon, ob ein räumlich statischer oder ein verschwenkter Messstrahl vorliegt.

Als Zahlenbeispiel kann die Strahlungsleistung herangezogen werden, die beim Scannen (also Messen mit raschen Verschwenken der Messstrahlung) auf eine 3,5mm Apertur eines Leistungsmessgeräts trifft, welches in 100mm Abstand zum Scanscheitelpunkt angeordnet ist. Die von dieser Apertur beim Überstreifen mit der Messlaserstrahl empfangene Strahlungsleistung ist der Anteil der von der Strahlungsquelle 75 abgegebenen optischen Leistung, die dem Winkelanteil am Vollkreis (360°, ca. 6,28rad) entspricht (unter Vernachlässigung etwaiger Leistungsverluste entlang des optischen Pfads von Strahlungsquelle zum Leistungsmessgerät). Die Apertur spannt (ohne Berücksichtigung der vernachlässigbaren Krümmung) einen Winkel von 3,5mm/100mm = 0,035rad auf. Der Winkelanteil und damit der Leistungsanteil beträgt damit $0,035rad/6,28rad=5,57*10^{-3}$. Deshalb gibt die Strahlungsquelle 75 des erfindungsgemässen Laserscanners oder -profilers eine optischen Leistung von wenigstens $14mW/5,57*10^{-3}=2512mW$, also wenigstens 2,5W ab, so dass die vom Leistungsmessgerät gemessene räumlich und zeitlich gemittelte Leistung der emittierten Messstrahlung wenigstens 14mW beträgt (wird die Strahlungsquelle 75 im Pulsbetrieb betrieben, so sind die 2,5W bereits als eine zeitlich mittlere Leistung der Strahlungsquelle zu verstehen, z.B. gemittelt über einen Zeitraum von 0,1s oder 5s, so dass letztlich die Mindestleistung von 14mW ein zeitliches und räumliches Mittel darstellt).

Die Scaneinheit 70 ist optional mit einer Kamera 76 ausgestattet, deren Bildfeld ebenfalls über das optische Strahlführungselement 77 auf den Spiegel 71 und von dort in Richtung des Ziels gelenkt wird.

Figur 6b stellt einen schematischen Ausschnitt der Scaneinheit 70 dar. Die Strahlungsquelle 75 emittiert einen Laserstrahl 30 als Messstrahlung, welcher durch eine Sammellinse 80 als ein erstes optisches Mittel vorfokussiert und leicht aufgeweitet auf einen Umlenkspiegel 81 als weiteres optisches Mittel trifft. Von diesem wird der Laserstrahl 30 in Richtung des Hauptobjektivs 83 reflektiert und auf einen zweiten Umlenkspiegel 85 als weitere optische Mittel und von dort z.B. auf die Strahlumlenkeinheit 71 (hier nicht dargestellt) gelenkt. Der Umlenkspiegel 85 kann aber auch identisch zum Drehspiegel 71 sein.

Nach der Reflexion des Strahls 30 am Zielobjekt wird bei dieser speziellen Ausführungsform der Empfangsstrahl 30b durch die rotierbare Strahlumlenkeinheit 71 und über den zweiten Umlenkspiegel 85 durch das Hauptobjektiv 83 auf ein weiteres optisches Mittel, einen Spiegel 84 gelenkt. Von diesem wird der Strahl 30b auf den Umlenkspiegel 81 reflektiert und von dort weiter auf den Sensor 82 gelenkt. Der Spiegel 84 faltet das optische System so, dass die optische Sensoreinheit 70 ein möglichst kleines Volumen einnimmt.

Die Figuren 7a und 7b zeigen als Beispiel für ein erfindungsgemässes geodätisches Vermessungsgerät 1 eine Totalstation. Ein derartiges geodätisches Vermessungsgerät des Stands der Technik ist beispielsweise in der EP 1686350 beschrieben. Als räumliche Standarddaten werden dabei Entfernung und Position (Richtung bzw. horizontaler und vertikaler Winkel) vom Vermessungsgerät, dessen absolute Position bekannt ist, zum zu vermessenden Ziel aufgenommen. Die Totalstation 1 weist ein Stativ 20 auf und ist - wie in Figur 7a gezeigt - in einer Höhe h über einem Bodenpunkt 400 angeordnet. Das Vermessungsgerät 1 steht typischerweise auf einem Dreibein-Stativ 20 und wird mittels Dreifuss 14 und Stativschraube 17 auf dem Stativteller 21 fixiert, zum Bodenpunkt 400 zentriert und festgeschraubt.

Wie in Figur 7b dargestellt, ist eine Basis 13 der Totalstation über den Dreifuss 14 direkt und fest mit dem Stativ 20 verbunden. Das Oberteil 10 der Totalstation 1 ist relativ zu der Basis 13 um eine vertikale Stehachse 7 drehbar. Das Oberteil 10 weist dabei eine - in diesem beispielhaften Aufbau durch zwei Säulen gebildete - Stütze 12, eine zwischen den Säulen um eine horizontale Kippachse 8 drehbar gelagerte Visiereinrichtung 11, z. B. ein Teleskop, sowie eine elektronische Anzeige-Steuereinheit 16 auf. Die Anzeige-Steuereinheit 16 kann in bekannter Weise zur Steuerung der Totalstation sowie zur Verarbeitung, Anzeige und Speicherung von Messdaten ausgebildet sein.

Die Visiereinrichtung 11 ist an der Stütze 12 um eine horizontale Kippachse 8 drehbar angeordnet und kann somit zur Ausrichtung auf ein Ziel relativ zur Basis 13 horizontal und vertikal geschwenkt bzw. gekippt werden. Zur Ausführung nötiger Schwenk- und Kippbewegungen für die Ausrichtung der Visiereinrichtung 11 sind (hier nicht dargestellte) Motoren vorhanden. Die Visiereinrichtung 11 ist optional als eine gemeinsame Visiereinrichtungs-Baueinheit ausgeführt, wobei ein koaxialer Kamerasensor sowie ein Grafikprozessor und als optische Mittel zur Strahlungsführung das Okular 15, ein Objektiv und eine Fokussieroptik in einem gemeinsamen Visiereinrichtungs-Gehäuse integriert sein können. Die optischen Mitteln sind dabei optional derart ausgebildet, dass die emittierte Messstrahlung und die erfasste reflektierte Messstrahlung wenigstens teilweise über die gleichen Mittel geführt werden, beispielsweise ein gemeinsames Objektiv für beide Strahlengänge verwendet wird. Mittels der Visiereinrichtung 11 kann das Ziel angezielt und die Entfernung von der Totalstation zu dem Ziel basierend auf der Detektion von vom Ziel rückgestrahlter Messstrahlung elektrosensorisch erfasst werden. Weiters sind Mittel zum elektrosensorischen Erfassen der Winkelausrichtung des Oberteils 10 der Totalstation 1 relativ zur Basis 13 und der Visiereinrichtung 11 relativ zur Stütze 12 vorgesehen. Diese elektrosensorisch erfassten Messdaten werden der Anzeige-Steuereinheit 16 zugeführt und von dieser verarbeitet, so dass die Position des Ziels relativ zur Totalstation durch die Anzeige-Steuereinheit 16 ermittelbar, optisch anzeigbar und speicherbar ist. Eine solche Totalstation kann auch als Laserscanner von Objekten verwendet werden. Dabei wird eine möglichst hohe Punktmessrate von einigen 10kHz bis Megahertz angestrebt, um vorteilhaft eine kurze Aufnahme- oder Messzeit zu erreichen. Eine hohe Messrate mit gleichzeitig hoher Messqualität ist durch unsere Lichtquelle mit einer Strahlung im erfinderischen Wellenlängenbereich gewährleistet. Optional weist die Totalstation eine Scaneinheit wie zu den Figuren 6a und 6b beschrieben auf. Eine solche Scaneinheit weist zudem den Vorteil auf, dass nicht eine massige Visiereinrichtung 11 sondern lediglich eine leicht gebaute Drehspiegeleinheit 71 (siehe Figur 6a) schnell bewegt werden muss, was kürzere Scanzeiten bei Objektaufnahmen ermöglicht.

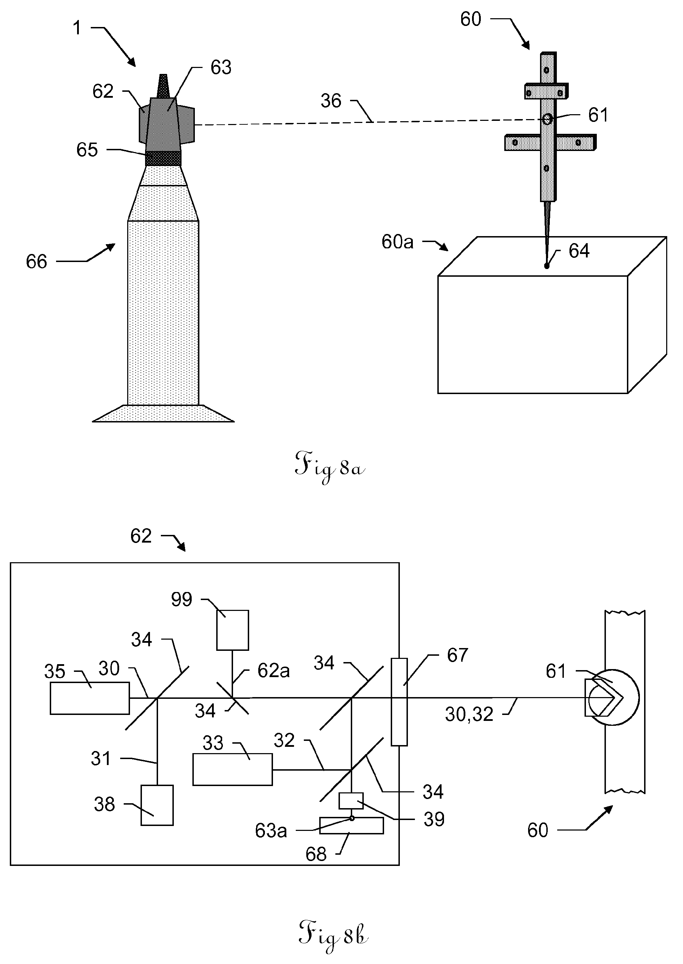

Figur 8a zeigt eine beispielhafte Ausführungsform eines erfindungsgemässen Vermessungsgeräts 1 einen Lasertracker, also ein Vermessungsgerät 1 mit Mikrometerpräzision, das für eine fortlaufende Verfolgung eines Ziels und eine Positionsbestimmung koordinativer Art dieses Ziels ausgebildet ist. Der gezeigte Lasertracker weist eine Basis 65, eine darauf angebrachte Stütze 63 und eine Strahllenkeinheit 62 auf. Der Lasertracker ist auf einem Stativ 66 angeordnet, weist mindestens einen Entfernungsmesser - insbesondere einen Absolutdistanzmesser (ADM) und/oder ein Interferometer - auf (hier nicht dargestellt) und misst mittels wenigstens eines Laserstrahles 36 als Messstrahlung die Distanz zu einem auf einem Messhilfsmittel 60 befindlichen Retroreflektor 61 als Ziel. Das Messhilfsmittel 60 - hier beispielhaft als Messtaster ausgeführt - umfasst einen Messkopf 64 zum Plazieren auf einem zu vermessenden Punkt eines Zielobjektes 60a.

Um Bewegungen des Messhilfsmittels 60 zu erkennen und nachvollziehen zu können, sodass der Laserstrahl 36 auf den Retroreflektor 61 ausgerichtet bleibt, weist der Lasertracker einen positionssensitiven Detektor (PSD) auf, insbesondere einen Tracking-Flächensensor, wie er beispielsweise in der WO 2007/079600 A1 geoffenbart ist.

Der PSD ist vorzugsweise in der Strahllenkeinheit 62 angeordnet und ermöglicht durch ein Erfassen der Ausrichtung des von einem Ziel, insbesondere dem Retroreflektor 61, reflektierten Laserstrahls das Nachführen der Ausrichtung des Laserstrahls. Durch das Nachführen der Laserstrahlausrichtung kann eine fortlaufende Zielverfolgung (Tracking) und/oder Feinanzielung des Ziels 61 erfolgen und die Entfernung und Position des Ziels 61 fortlaufend relativ zum Vermessungsgerät bestimmt werden. Bei der Zielverfolgung können verschiedene Ursachen das Erkennen des Ziels 61 bzw. dessen Feinanzielung bzw. Verfolgung erschweren oder verunmöglichen bzw. die maximale operative Reichweite einschränken. Derlei störende Ursachen sind vor allem den optischen Pfad beeinflussende Sichtverhältnisse wie Luftturbulenzen nahe an Fensterfronten, Luftflimmern über Heizungsrohren, oder Luftstaub. All diese Effekte reduzieren das Messignal und verringern das Signal-Rauschverhältnis. Durch Sendeeinheiten mit den erfinderischen Wellenlängen können aber diese Nachteile mehr als kompensiert werden und eine Messgenauigkeit im Mikrometerbereich erzielt werden.

Tracker-artige Robotic-Totalstationen, welche ebenfalls mittels Kamera- oder PSD-Sensorik eine fortlaufende Zielverfolgung aufweisen, sind auch für Aussenanwendungen konstruiert und ermöglichen längere Zieldistanzen bis über 1km. Die nachteilige Beeinflussung des optischen Pfades ist vor allem bei Robotic-Totalstationen ausgeprägt. Durch Witterungseinflüsse, wie Regen, Nebel oder Hitzeflimmern werden die optischen Signale für Distanz- und Richtungsmessung abgeschwächt. Weiter sind Fremdreflexe störend, also z.B. Licht, welches neben der vom Ziel reflektierten Messstrahlung auf den Positions- oder Bildsensor abgebildet wird. Solche Fremdreflexe sind verursacht durch fremde Licht- bzw. Strahlquellen wie direkte oder indirekte, also von Strassenschildern oder Glasflächen reflektierte, Sonneneinstrahlung oder Scheinwerfer von Baufahrzeugen. Besonders bei der Zielverfolgung sind Störungen problematisch, da diese häufig zum Verlust des Einlockens (oder Einrastens oder Ankoppelns) auf den Zielreflex führen, was ein zeitaufwändiges erneutes Einlocken erforderlich macht. Die vorliegende Erfindung bietet dabei den Vorteil, dass aufgrund der verwendeten Wellenlänge und der hohen emittierten Strahlungsleistung der Einfluss von Fremdlicht wie beschrieben deutlich vermindert wird und aufgrund der höheren Ausgangsleistung Witterungseinflüsse zumindest teilweise kompensierbar sind, dies insbesondere auch bei der Positionsbestimmung dank der wegen höherer Sendeleistung verbesserter Erkennbarkeit der Objektformen bei den Kamerabildern des Ablagesensors.

Figur 8b zeigt die schematisch die Strahllenkeinheit 62 aus Figur 8a. Die Strahllenkeinheit 62 weist zwei Strahlungsquellen 33 und 35 auf. Die Strahlungsquelle 33 emittiert Messstrahlung (Zielverfolgungsstrahlung 32), die in bekannter Weise zur Verfolgung des Ziels, des Retroreflektors 61 dient (Tracking), wohingegen die Messstrahlung 30 der Strahlungsquelle 35 zur Entfernungsmessung dient. Bevorzugt weisen dabei nicht nur eine, sondern beide Messstrahlungen 30 und 32 dabei eine Wellenlänge im erfindungsgemässen Bereich von 1210nm bis 1400nm auf.

Die Strahllenkeinheit 62 verfügt an seiner dem Messhilfsinstrument 60 zugewandten Vorderseite über eine Ein- und Austrittsoptik 67 zur Aussendung von Strahlung entlang der Messachse und zum Einlass reflektierter Strahlung. Die Ein- und Austrittsoptik 67 kann insbesondere als Fixfokus-Objektiv mit unveränderlichem Fokus und unveränderlichem Zoom ausgestaltet sein.

Neben der ersten Strahlungsquelle 35 zur Erzeugung einer Messstrahlung 30 weist die Strahllenkeinheit 62 des Vermessungsgeräts einen Sensor (Distanzmessvorrichtung) 38 zum Empfang der reflektierten Messstrahlung 30 und zum Ermitteln einer Distanz zu einem Ziel, hier dem Retroreflektor 61. Die Distanzmessvorrichtung 38 ist beispielsweise ein Absolutdistanzmessgerät, kann aber auch ein Interferometer, oder eine Kombination von beiden sein.

Die Strahllenkeinheit 62 weist ausserdem die zweite Strahlquelle 33 zur Erzeugung einer Zielverfolgungsstrahlung 32 und einen weiteren Sensor (Zielerfassungseinheit) 68 zum Empfang der reflektierten Zielverfolgungsstrahlung 32, zur Bestimmung eines Auftreffpunkts 63a der reflektierten Strahlung auf dem, insbesondere als zweidimensionalen Bildsensor (Pixel-Array-Sensor) ausgestaltetem, Sensor der Zielerfassungseinheit 68 und zur Erzeugung eines Ausgangssignals zur Steuerung einer Zielverfolgungsfunktionalität des Lasertrackers.

Vorzugsweise verläuft die optische Achse der ersten Strahlquelle 35 ausserhalb des Lasertrackers koaxial zur optischen Achse der zweiten Strahlquelle 33 auf einer gemeinsamen Emissionsachse. Dies setzt voraus, dass die beiden Strahlquellen 33, 35 eine gemeinsame Austrittsoptik 67 aufweisen. Eine gemeinsame Ein- und Austrittsoptik 67 zweier Strahlengänge bedeutet, dass die beiden Strahlengänge durch dasselbe optische Element, wie eine Linse oder eine Scheibe, aus dem Gerät in die Umgebung des Gerätes austreten oder aus der Umgebung des Gerätes in das Gerät eintreten. In der Regel sind dabei die Strahlengänge zumindest annähernd koaxial.

Darüber hinaus weist die Strahllenkeinheit 62 eine Anzahl an Strahlteilern 34 auf, über die die Mess- und Zielverfolgungsstrahlungen 30, 32 entlang der Emissionsachse durch die Ein- und Austrittsoptik 67 emittiert werden und über die die vom Retroreflektor 61 reflektierte Strahlung auf die Sensoren 38 bzw. 68 geleitet wird.

Die Messstrahlung 30 und die Zielverfolgungsstrahlung 32 unterscheiden sich insbesondere hinsichtlich ihrer Polarisation und/oder Wellenlänge so voneinander, dass durch eine entsprechende Ausgestaltung eines vor der Zielerfassungseinheit 68 positionierten Filters 39 die für die Entfernungsmessung bestimmte reflektierte Strahlung herausgefiltert wird und nicht zum Sensor 68 gelangt. Alternativ oder zusätzlich kann durch eine entsprechende Ausgestaltung des entsprechenden Strahlteilers 34 die Gesamtheit der reflektierten Strahlung 30, 32 in einen für die Distanzmessung bestimmten Anteil und einen für die Zielverfolgung bestimmten Anteil trennbar sein.

Die Strahllenkeinheit 62 ist so auf das Messhilfsinstrument 60 ausgerichtet, dass die von der zweiten Strahlquelle 33 emittierte Zielverfolgungsstrahlung 32 auf den Retroreflektor 61 trifft und der Sensor (Zielerfassungseinheit) 68 die reflektierte Zielverfolgungsstrahlung detektiert. Durch Bestimmung eines Auftreffpunkts 63a der reflektierten Strahlung auf der Oberfläche des Sensors 68 wird ein Ausgangssignals zur Steuerung einer Fein-Anzielfunktionalität und einer Zielverfolgungsfunktionalität des Lasertrackers erzeugt.

Zum Ermitteln der Entfernung zum Messhilfsinstrument 60 bzw. Ziel 61 erzeugt die erste Strahlquelle 35 eine Messstrahlung 30, die koaxial mit der Zielverfolgungsstrahlung 32 auf den Retroreflektor 61 gesendet wird, wo sie - aufgrund der kontinuierlichen Zielverfolgung - ebenso koaxial retroreflektiert wird. Die reflektierte Messstrahlung 30 wird über Strahlteiler 34 auf den Sensor (Distanzmessvorrichtung) 38 geleitet, welches eine Distanz zum Ziel (Messhilfsinstrument) 60 bzw. genauer Retroreflektor 61 ermittelt. Gleichzeitig wird über Winkelmessfunktionalität des Lasertrackers die aktuelle Ausrichtung der Strahllenkeinheit 62 und damit die Richtung zum Messhilfsinstrument 60 ermittelt. Aus Richtung und Entfernung kann eine relative Position des Messhilfsinstruments 60 zum Vermessungsgerät 1 bestimmt werden. Mittels der erfinderischen Wellenlängen im Bereich von 1210nm bis 1400nm können die wenigstens zwei Lichtquellen derart verbessert werden, dass ein Lasertracker oder eine Robotic-Totalstation dank erhöhter Sendeleistung und/oder gleichzeitig reduziertem solaren Umgebungslicht 3D-Positionsmessungen bei kurzen robuster und bei grossen Distanzen verbessert werden. Zudem sind 3D-Positionsmessungen gegenüber dem Stand der Technik mit wesentlich höheren Messraten von mehreren zehn Kilohertz bis Megaherz möglich.

Ebenfalls dargestellt ist eine optionale Pointer-Einheit mit einer Pointer-Strahlquelle 99 zur Erzeugung eines sichtbaren Pointer-Strahls 62a, welcher über einen Pointer-Strahlteiler 34 im wesentlichen koaxial zur Messstrahlung 30 und zur Zielverfolgungsstrahlung 32 durch die Ein- und Austrittsoptik 67 emittierbar ist. Der Pointer-Strahl 62a erzeugt dabei einen sichtbaren (beispielsweise roten) Auftreffpunkt und dient zur Information für den Benutzer. Dies ist bei der vorliegenden Erfindung vorteilhaft, da die Messstrahlung 30 und 32 für das menschliche Auge unsichtbar ausgestaltet sind und somit deren Auftreffpunkt auf einer Oberfläche für den Benutzer nicht sichtbar ist.

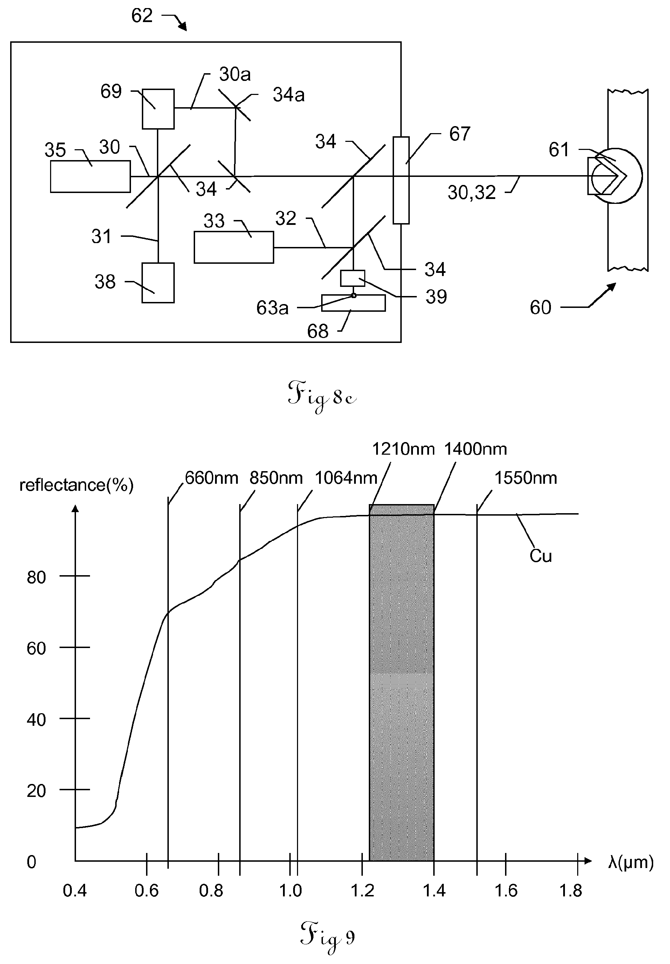

Figur 8c stellt eine alternative Fortbildung der Erfindung dar, in der anstelle der Pointer-Strahlquelle der Figur 8b die Strahllenkeinheit einen optischen Frequenzwandler 69 aufweist, mit Hilfe dessen die Frequenz eines Anteils der Messstrahlung 30 (oder Zielverfolgungsstrahlung 32) so geändert wird, dass Strahlung im sichtbaren Bereich emittiert wird. Hierzu wird mittels eines Strahlteilers 34 ein Anteil, z.B. von 2,5%, 10% oder 25%, der Messstrahlung 30 der ersten Wellenlänge ausgekoppelt und auf den Frequenzwandler 69 geführt, welcher Strahlung 30a erzeugt, die diesen Anteil der Messstrahlung in Strahlung einer zweiten Wellenlänge konvertiert. Vorzugsweise handelt es sich bei dem Frequenzwandler 69 um einen Frequenzverdoppler, so dass die zweite Wellenlänge halb so gross ist wie die erste Wellenlänge. Je nach Wert der ersten Wellenlänge ergibt sich dann eine Wellenlänge zwischen 605nm und 700nm, wobei die erste Wellenlänge und der Frequenzwandler 69 vorzugsweise derart aufeinander abgestimmt sind, dass die zweite Wellenlänge im Bereich zwischen 645nm und 680nm liegt. Die konvertierte Strahlung 30a wird mittels der optischen Mittel 34a und 34 zurück auf die Emissionsachse geführt, so dass die konvertierte Strahlung 30a im Wesentlichen koaxial zur Messstrahlung 30 und zur Zielverfolgungsstrahlung 32 durch die Ein- und Austrittsoptik 67 emittierbar ist. Die Strahlung 30a dient dann als Pointer-Strahl zur Erzeugung eines sichtbaren (beispielsweise roten) Auftreffpunkts und zur Information für den Benutzer. Der erfindungsgemässe Wellenlängenbereich zwischen 1210nm und 1400nm eignet sich vorteilhaft besonders gut für eine Frequenzverdopplung, um damit sichtbares Licht zu erzeugen, wodurch wie beschrieben z.B. vorteilhaft auf eine gesonderte Strahlungsquelle für einen Pointer-Strahl verzichtet werden kann. Eine derartige Fortbildung ist nicht auf ein als Lasertracker ausgebildetes Vermessungsgerät beschränkt, sondern eignet sich beispielsweise auch für einen elektronischen Distanzmesser wie zu Figur 5 beschrieben, da auch in diesem Fall die Erzeugung eines sichtbaren Auftreffpunkts vorteilhaft ist.

Die vorliegende Erfindung bietet dabei einen weiteren Vorteil: die bei Vermessungsgeräten mit einer Wellenlänge im visuellen Bereich des Spektrums verwendeten optischen Mittel, wie beispielsweise Linsen z.B. der Ein- und Austrittsoptik 67, Strahlteiler 34 oder die in Figur 6b dargestellten Umlenkspiegel und Linsen, sind meist aus Silikatgläsern gefertigt. Diese zeichnen sich durch hohe Durchlässigkeit, hohe Beständigkeit und geringe Kosten aus. Die Durchlässigkeit liegt auch für Wellenlängen bis 1400nm vor, also für den IR-A-Bereich (nach DIN 5031). Z.B. weist Borosilikatglas N-BK7 hohe Transparenz im Wellenlängenbereich von 400nm bis 1400nm auf (nicht aber darüber hinaus). Somit bietet die vorliegende Erfindung nicht nur den Vorteil, dass zur Strahlführung der Messstrahlung des erfindungsgemässen Wellenlängenbereichs zwischen 1210nm und 1400nm und einer Pointer-Strahlung nach Figur 8c mit der konvertierten Strahlung oder auch 8b mit einer separaten Pointer-Strahlungsquelle problemlos die gleichen optischen Mittel verwendbar sind. Die vorliegende Erfindung bietet zudem den Vorteil, dass standardisierte, gängige optische Mittel zur optischen Strahlungsführung verwendet werden können. Dadurch ergeben sich Vorteile bei der Fertigung des Vermessungsgeräts, was zu Zeit- und Kostenersparnissen führt. Im Gegensatz sind für ein Vermessungsgerät, in dem eine Wellenlänge im IR-B-Bereich Verwendung findet, insbesondere aus dem Stand der Technik bekannte Vermessungsgeräte mit Wellenlängen >2000nm, Spezialgläser für die optischen Mittel erforderlich, was nachteilig zu einem erhöhten Fertigungsaufwand führt.

Bei Vermessungen mit kooperativen Zielen wie die in Figur 8a-8c dargestellten Retroreflektoren ist weiter nachteilig, dass auch diese mit vergleichsweise teuren Gläsern speziell gefertigt sein müssen, was die Kosten eines Systems aus Vermessungsgerät 1 und Zielobjekt 61 weiter erhöht. Dagegen bietet die vorliegende Erfindung den Vorteil, dass Vermessungsziele 61 verwendbar sind, die bereits bei Vermessungen im visuellen Spektralbereich Verwendung finden.

Ein weiterer Vorteil der vorliegenden Erfindung speziell in Bezug auf Retroreflektoren 61 ergibt sich aus Folgendem: Aus dem Stand der Technik bekannte kooperative Vermessungsziele sind z.B. die Retroreflektoren 61 der Figuren 8a-8c. Zur Erhöhung des Reflexionsvermögens sind manche Reflektoren mit einer Reflexbeschichtung versehen. Z.B. weisen Reflektoren des Herstellers Leica-Geosystems als Reflexbeschichtung eine Kupferschicht auf.

Wie in Figur 9 dargestellt, nimmt das Reflexionsvermögen von Kupfer (und anderer Edel- oder Halbedelmetalle) im optischen Spektralbereich mit steigender Wellenlänge stetig zu (der Graph stellt dabei nur ungefähre, grobe, eher qualitative Werte dar). Unterhalb einer Wellenlänge von etwa 590nm beträgt das Reflexionsvermögen einer aus dem Stand der Technik bekannten Kupferbeschichtung weniger als 50%, bei einer Wellenlänge von 660nm beträgt sie nur ca. 70%, wohingegen die Reflektivität bei der Wellenlänge gemäss der vorliegenden Erfindung mit über 90% den maximal möglichen Wert zumindest annähernd erreicht. Die vorliegende Erfindung bietet also den Vorteil, dass im Vergleich zu Vermessungsgeräten des Stands der Technik von einem aus dem Stand der Technik bekannten kooperativen Ziel mit einer Kupferbeschichtung deutlich mehr Messstrahlung reflektiert wird. Mit anderen Worten werden durch die vorliegende Erfindung Strahlungsverluste vermindert, wodurch bei unveränderter Leistung der emittierten Messstrahlung die Leistung der erfassten Messstrahlung erhöht ist bzw. bei bzw. zur Erzielung der gleichen erfassten Leistung eine geringere Ausgangsleistung notwendig ist.

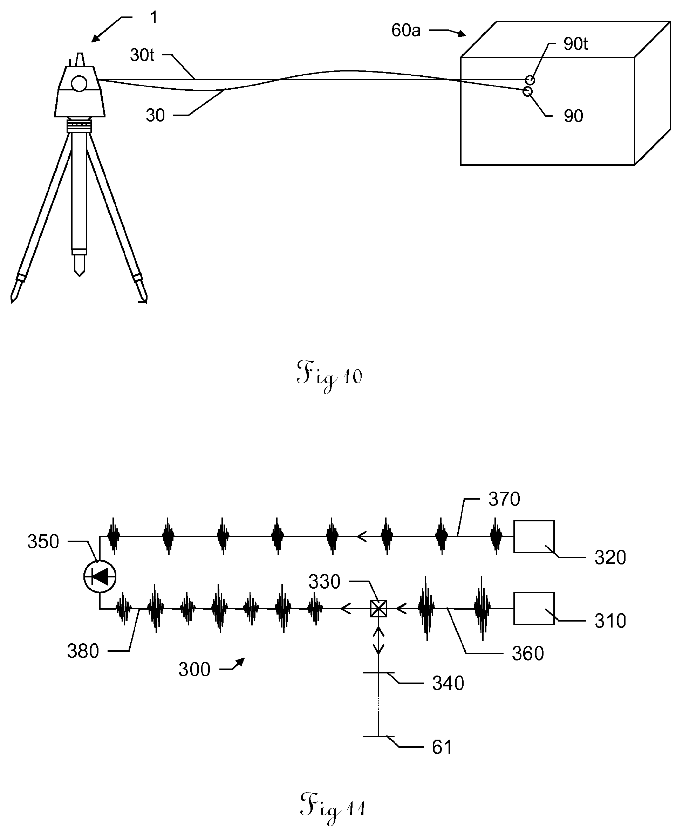

Eine vergleichsweise grosse Wellenlänge im Bereich von 1210nm bis 1400nm ist weiterhin vorteilhaft auf atmosphärische Einflüsse (Turbulenzen), die dazu führen, dass der Messstrahl von seiner ursprünglichen Ausbreitungsrichtung abweicht und damit der tatsächliche Auftreffpunkt auf dem Ziel nicht der gemessene ist, wodurch sich Messungenauigkeiten ergeben. Dies ist in Figur 10 schematisch dargestellt. Das Vermessungsgerät 1 sendet die Messstrahlung 30 aus, deren Ausbreitung aufgrund der Lufteinflüsse nicht absolut geradlinig ist (im Vergleich dazu den "theoretischen" absolut geraden Lichtstrahl 30t). Somit stimmt der tatsächliche Auftreffpunkt 90 des Messstrahls auf dem Ziel 60a nicht mit dem erwarteten bzw. angenommenen Auftreffpunkt überein, sondern weicht davon ab, was zu Messfehlern führt, die umso grösser sind, je grösser die Entfernung zum Zielobjekt 70 ist. Diese Abweichung kann durch die radiale Varianz $\sigma^2$ beschrieben werden, die wiederum durch folgende Gleichung darstellbar ist:

$$\sigma^2 = c^2 \lambda^{-1/6} D^{17/6}$$

wobei c ein Mass für die atmosphärische Turbulenz ist, $\lambda$ die Wellenlänge der Messstrahlung und D die Entfernung zum Ziel. Aus der Gleichung ist ersichtlich, dass die radiale Varianz und damit die Abweichung umso geringer ist, je grösser die Wellenlänge ist, wodurch der erfindungsgemässe Wellenlängenbereich vorteilhaft ist z.B. gegenüber Wellenlängen des sichtbaren Bereichs des Spektrums, insbesondere bei Vermessungen mit grossen Messstrecken und stark turbulenter Atmosphäre. Mit zunehmender Wellenlänge verringert sich ebenfalls der mit der Messdistanz exponentiell grösser werdende Lichtverlust durch Streuung an Aerosolen. Diese Schwebeteilchen streuen einen Teil der Messstrahlung und zwar umso schwächer je länger die Wellenlänge. Eine im Vergleich zum sichtbaren Spektrum lange Wellenlänge wird daher wesentlich weniger abgeschwächt.

In einer optionalen Weiterbildung des erfindungsgemässen Vermessungsgeräts weist dieses Mittel auf, die ein auf einem Frequenzkamm basierenden oder durch einen Frequenzkamm unterstützten Messen von Distanzen ermöglichen. Dazu weist der entsprechende Entfernungsmesser eine Strahlungsquelle des erfindungsgemässen Wellenlängenbereichs auf, die zur Aussendung eines üblicherweise im MHz-Bereich gepulsten, hochpräzise getimten Femtosekunden-Lasers ausgestaltet ist. Dadurch kann im Frequenzbereich ein sogenannter Frequenzkamm dünner scharfer Linien erzeugt werden, was im Zeitbereich möglichst niedrigem Phasenrauschen entspricht. Verschiedene Ansätze zum frequenzkammbasierten oder frequenzkammunterstützten Messen von Distanzen werden beispielsweise in dem Aufsatz "Frequency-Comb Based Approaches to Precision Ranging Laser Radar" (N. R. Newbury, T.-A. Liu, I. Coddington, F. Giorgetta, E. Baumann, W. C. Swann; National Institute of Standards and Technology) beschrieben.

In Figur 11 ist rein beispielhaft eine Interferometer-Einheit 300 mit zwei Frequenzkamm-Lasersignalen 360, 370 ("dual-comb interferometer") zum Durchführen einer kombinierten Laufzeit- und interferometrischen Distanzmessung dargestellt. Dabei sendet eine erste Strahlungsquelle 310 ein erstes Frequenzkammsignal 360 aus. Dieses wird über einen ersten Strahlteiler 330 und über einen Referenzstrahlteiler 340 auf einen Retroreflektor als Messziel 61 geleitet. Das von Messziel 61 und Referenz 360 reflektierte kombinierte Signal 380 wird auf eine Frequenzkammanalyseeinheit 350 geleitet, wo die relative Ankunftszeit der von Messziel 61 und Referenz 360 reflektierten Pulse für eine Laufzeitdistanzmessung verwendet werden kann. Ein von einer zweiten Strahlquelle 320 erzeugtes Referenzfrequenzkammsignal 370, das eine von dem ersten Frequenzkammsignal 360 leicht abweichende Wiederholungsrate aufweist, kann in der Frequenzkammanalyseeinheit 350 zusammen mit dem reflektierten kombinierten Signal 380 für eine interferometrische Distanzmessung heterodyn ausgelesen werden. Grundsätzlich funktionieren diese Frequenzkamm- oder Comblaser-Messmethoden auch auf nicht kooperative Ziele wie raue Oberflächen, da die Polarisation des reflektierten Lichts teilweise erhalten bleibt.

Als Alternative zur Messung zu kooperativen als auch nicht kooperativen Zielen erfolgt die Messung einer Entfernung mittels des Waveform Digitalisierungsprinzips (WFD) Die Entfernung wird mittels eines in der Strahllenkeinheit 62 (vgl. Figur 8a) vorgesehenen Wave-Form-Digitizing-Modul gemessen. Dieses Verfahren zeichnet sich durch seine sehr hohe Empfindlichkeit aus und erlaubt auch präzise Entfernungsmessungen ohne Verwendung eines Messhilfsmittels oder eines Retroreflektors. Das WFD-Modul weist eine Strahlungsquelle zur Erzeugung eines gepulsten Lichtstrahls, insbesondere Laserstrahls, (WFD-Strahl) auf mit der erfindungsgemässen Wellenlänge im Bereich zwischen 1210nm und 1400nm. Auf bekannte, als Waveform Digitizing bezeichnete Art und Weise werden die Pulse der rückgestreuten Messstrahlung und optional die eines geräteinternen Referenzstrahls digitalisiert. Die so digitalisierten Ziel- und Referenzpulse werden miteinander verglichen, insbesondere der zeitliche Abstand zwischen diesen, und so durch eine Recheneinheit die Entfernung zum Zielobjekt ermittelt. Der WFD-Strahl weist mindestens einen Abtastungslichtpuls (WFD-Puls) auf, der so moduliert oder codiert ist, dass dessen vom Zielobjekt zurückkommender Anteil zum Ausgewertetwerden nach der Wellenformdigitalisierungsmethode (WFD-Methode) - mit zeitlicher Abtastung des einen oder mehreren zurückkommenden Pulse - vorgesehen ist (also abtast- und auswertbar ist nach der WFD-Methode). Das Waveform Digitizing (WFD) Distanzmessprinzip basiert entweder auf dem Laufzeit- oder dem Phasenmessprinzip oder aber auch als Kombination von beiden Methoden. Vorteilhaft ist dabei insbesondere die Möglichkeit, mit der WFD-Strahlung Entfernungen über grössere Distanzen zu vermessen, als mit einem herkömmlichen Präzisions-Absolutdistanzmesser oder einem Interferometer. Diese Vermessungsmethode ist als vorteilhaft angewandt in einem erfindungsgemässen Vermessungsgerät mit grosser Messreichweite, welche aufgrund der erfindungsgemässen Wellenlänge der Messstrahlung und deren Leistung besonders gut erzielbar ist.

Alternativ weist das Vermessungsgerät ein FMCW-Modul (frequency modulated continuous wave) auf, das eine zum Aussenden frequenzmodulierter Messstrahlung mit der erfindungsgemässen Wellenlänge im Bereich zwischen 1210nm und 1400nm ausgestaltete Strahlungsquelle aufweist, wodurch eine Entfernungsmessung mittels eines FMCW-Verfahrens ermöglicht wird. Insbesondere kann das FMCW-Modul einen kohärenten Laserradar aufweisen, wie z. B. in der EP 1 869 397 B1 beschrieben. Der in dieser optionalen Ausführungsform verwendete Ansatz zur Entfernungsmessung zu einer diffus streuenden Oberfläche eines Zielobjekts besteht darin, frequenzmodulierte elektromagnetische Strahlung, wie z. B. Licht, auf das zu vermessende Ziel auszusenden und nachfolgend ein oder mehrere Echos von rückstreuenden Objekten, idealerweise ausschliesslich vom zu vermessenden Ziel, zu empfangen. Nach dem Empfang wird das ggf. überlagerte Echosignal mit einem Mischsignal überlagert und dadurch die zu analysierende Frequenz des Signals vermindert, so dass vorrichtungsseitig nur ein geringerer Aufwand notwendig ist. Das Mischen kann dabei entweder als homodynes Verfahren mit dem gesendeten Signal oder als heterodynes Verfahren mit einem periodischen, insbesondere harmonischen, Signal bekannter Periode erfolgen. Somit unterscheiden sich die Verfahren darin, dass mit dem Sendesignal selbst oder mit einem harmonischen Signal mit einer eigenen Frequenz gemischt wird. Die Mischung dient dazu, das empfangene Signal zu tieferen Frequenzen zu transformieren. Nachfolgend werden aus dem resultierenden Signal die Laufzeiten und damit - bei bekannter Ausbreitungsgeschwindigkeit der verwendeten Strahlung - die Distanzen zu den zu vermessenden Zielen bestimmt.

Die zur Umsetzung dieser Verfahren verwendeten Vorrichtungen nutzen üblicherweise einen Signalgenerator als Chirp-Generator, der einer modulierbaren Strahlungsquelle ein Signal aufprägt. Zur Emission und zum Empfang kommen Sende- und Empfangsoptiken zum Einsatz, denen ein Detektor bzw. Empfänger mit nachfolgendem Mischer, A/D-Wandler und digitalem Signal-Prozessor und/oder FPGA nachgeschaltet ist. Aus der Frequenz- und ggf. der Phaseninformation dieses Signals werden die Laufzeiten bestimmt. Optional ist ein WFD-Modul oder FMCW-Modul eines erfindungsgemässen Vermessungsgeräts frequenzkammunterstützt ausgestaltet.

Es versteht sich, dass diese dargestellten Figuren nur mögliche Ausführungsbeispiele schematisch darstellen. Die verschiedenen Ansätze können erfindungsgemäss ebenso miteinander sowie mit Vermessungsgeräten und Vermessungsverfahren des Stands der Technik kombiniert werden.

## Patentansprüche

1. Opto-elektronisches Vermessungsgerät (1) zur Distanz- und/oder Positionsbestimmung, insbesondere Lasertracker, Laserscanner, Profiler, geodätisches Vermessungsgerät oder elektrooptischer Richtungs- oder Distanzmesser, mit

   • einer Strahlungsquelle (35, 40, 75, 310) zur Erzeugung optischer Messstrahlung (30, 36) einer ersten Wellenlänge,
   • einem opto-elektronischen Sensor (38, 82) zur zeit- und/oder ortsaufgelösten Detektion von Messstrahlung,
   • optischen Mitteln (15, 34, 67, 71, 77, 80, 83, 84, 85, 330, 340), welche derart zur optischen Strahlungsführung ausgebildet sind, dass

   □ die Messstrahlung (30, 36) gerichtet in den freien Raum auf ein zu vermessendes Ziel (41, 60a, 61) emittierbar ist und
   □ vom Ziel (41, 60a, 61) reflektierte Messstrahlung (30b) wenigstens teilweise auf den Sensor (38, 82) geführt wird,
   **dadurch gekennzeichnet, dass**
   die Strahlungsquelle (35, 40, 75, 310) derart ausgebildet ist, dass

   • die erste Wellenlänge im Nahinfrarotbereich zwischen 1210nm und 1400nm liegt und
   • die Leistung der emittierten Messstrahlung (30, 36) im zeitlichen und räumlichen Mittel wenigstens 14mW beträgt.

2. Vermessungsgerät (1) nach Anspruch 1, **dadurch gekennzeichnet, dass** die erste Wellenlänge zwischen 1280nm und 1320nm, insbesondere zwischen 1290nm und 1310nm, liegt.

3. Vermessungsgerät (1) nach Anspruch 1, **dadurch gekennzeichnet, dass** die erste Wellenlänge zwischen 1320nm und 1400nm, insbesondere zwischen 1325nm und 1345nm, liegt.

4. Vermessungsgerät (1) nach einem der vorherigen Ansprüche, **dadurch gekennzeichnet, dass** die Messstrahlung (30, 36) mit der mittleren Leistung von wenigstens 40mW, insbesondere wenigstens 100mW, emittiert wird.

5. Vermessungsgerät (1) nach einem der vorherigen Ansprüche, **dadurch gekennzeichnet, dass** die Strahlungsquelle (35, 40, 75, 310) ausgebildet ist zur Erzeugung von Messstrahlung (30, 36) mit einer Signalmodulation, insbesondere einer Burst-Modulation oder Frequenzmodulation.

6. Vermessungsgerät (1) nach einem der vorherigen Ansprüche, **dadurch gekennzeichnet, dass** die Strahlungsquelle (35, 40, 75, 310) ausgebildet ist als

   • Laserquelle, insbesondere als Laserdiode, im Speziellen als InGaAs- oder InGaAsP-Laserdiode, oder als Faserlaser, oder
   • Superlumineszenz-LED (SLED) mit optischem Verstärker.

7. Vermessungsgerät (1) nach einem der vorherigen Ansprüche, **dadurch gekennzeichnet, dass** die optischen Mittel (15, 34, 67, 71, 77, 80, 83, 84, 85, 330, 340) derart ausgebildet sind, dass

   • die Messstrahlung (30, 36) als divergenter Messstrahl emittiert wird und/oder
   • die Messstrahlung (30, 36) um wenigstens eine, insbesondere zwei, Achse schwenkbar ist und/oder
   • das Vermessungsgerät (1) ein gemeinsames Objektiv zum Emittieren der Messstrahlung (30, 36) und zum Empfangen von vom Ziel (41, 60a, 61) reflektierter Messstrahlung (30b) aufweist und/oder
   • die optischen Mittel (15, 34, 67, 71, 77, 80, 83, 84, 85, 330, 340) auch für Licht im sichtbaren Bereich des optischen Spektrums im Wesentlichen durchlässig sind, insbesondere wozu die optischen Mittel (15, 34, 67, 71, 77, 80, 83, 84, 85, 330, 340) im Wesentlichen aus optischen Gläsern, insbesondere aus Borosilikatgläsern, und/oder aus optischen Kunststoffen gefertigt sind.

8. Vermessungsgerät (1) nach einem der vorherigen Ansprüche, **dadurch gekennzeichnet, dass** das Vermessungsgerät (1) einen optischen Frequenzwandler (69), insbesondere Frequenzverdoppler, aufweist, wodurch ein Anteil von höchstens 25%, insbesondere höchstens 10%, im Speziellen höchstens 2,5%, der Messstrahlung (30, 36) in eine zweite Wellenlänge konvertierbar ist, welche niedriger, insbesondere halb so gross ist wie die erste Wellenlänge, so dass, insbesondere simultan, zusätzlich Strahlung (30a) der zweiten Wellenlänge emittierbar ist, insbesondere wobei die zweite Wellenlänge im roten Spektralbereich, im Speziellen zwischen 645nm und 680nm, liegt.

9. Vermessungsgerät (1) nach einem der vorherigen Ansprüche,
   **dadurch gekennzeichnet, dass**

   • der Sensor (38, 82) für Messgenauigkeiten von Koordinaten im Sub-Millimeter- und/oder Zeiten im Sub-Picosekundenbereich ausgebildet ist
   • und/oder das Vermessungsgerät (1) ein um eine Basis (13, 65) verschwenkbares Oberteil (10, 63) aufweist, wobei das Oberteil (10) die Strahlungsquelle (35, 40, 75, 310) aufweist, und/oder
   • das Vermessungsgerät (1) zur Vermessung natürlicher, nicht-kooperativer Ziele (41) und Oberflächen ausgebildet ist.

10. Vermessungsgerät (1) nach einem der vorherigen Ansprüche,
    **dadurch gekennzeichnet, dass**
    das Vermessungsgerät (1) ausgebildet ist als

    • handhaltbares Laser-Distanzmessgerät, oder
    • luftgestützter Laserscanner oder Laserprofiler(Lidar), oder
    • terrestrischer Laserscanner (TLS)oder Laserprofiler mittlerer oder grosser Reichweite, oder
    • Laser-Totalstation (TPS).

11. Vermessungsgerät (1) nach einem der vorherigen Ansprüche,
    **dadurch gekennzeichnet, dass**
    das Vermessungsgerät (1) aufweist

    • ein Waveform-Digitizing-Modul oder
    • ein Frequency-Modulated-Continuous-Wave-Modul und/oder einen optischen Mischer, der zur Durchführung eines homodynen oder heterodynen Mischverfahrens ausgebildet ist.

12. Opto-elektronisches Messverfahren für ein opto-elektronisches Vermessungsgerät (1) nach Anspruch 1 zur Bestimmung wenigstens einer Distanz und/oder Position eines Ziels (41, 60a, 61) mit

    • Emittieren der Messstrahlung (30, 36) auf ein zu vermessendes Ziel (41, 60a, 61),
    • Empfangen wenigstens eines Teils der vom Ziel (41, 60a, 61) reflektierten Messstrahlung (30b),
    • Bestimmen der Distanz und/oder Position mittels der empfangenen Messstrahlung (30b),
    **dadurch gekennzeichnet, dass**
    die Messstrahlung (30, 36) emittiert wird mit
    • einer ersten Wellenlänge im Nahinfrarotbereich zwischen 1210nm und 1400nm, insbesondere zwischen 1280nm und 1320nm, im Speziellen zwischen 1290nm und 1310nm, oder insbesondere zwischen 1320nm und 1400nm, im Speziellen zwischen 1325nm und 1345nm, und
    • einer Leistung von im zeitlichen und räumlichen Mittel wenigstens 14mW, insbesondere wenigstens 40mW, im Speziellen wenigstens 100mW.

13. Messverfahren nach Anspruch 12,
    **dadurch gekennzeichnet, dass**

    • das Bestimmen der Distanz nach dem Waveform-Digitizing-Verfahren, dem Phasendifferenzverfahren, dem Schwellwertverfahren oder dem Fizeau-Verfahren erfolgt und/oder
    • das Bestimmen der Position nach der Schwerpunktsauswertung, Korrelationsauswertung oder Maximumlikelyhood-Schärtverfahren erfolgt, und/oder
    • Messstrahlung (30, 36) moduliert wird mittels

    ☐ Impulsmodulation
    ☐ Intervallmodulation,
    ☐ Doppelimpuls-Intervallmodulation
    ☐ Amplitudenmodulation,
    ☐ Frequenzmodulation,
    ☐ Burst-Modulation,
    ☐ Polarisationsmodulation oder
    ☐ Wellenlängenmodulation.

14. Messverfahren nach Anspruch 12 oder 13,
    **dadurch gekennzeichnet, dass**
    die Messstrahlung (30, 36) wenigstens zwei Wellenlängen aufweist und für jede Wellenlänge eine Signalamplitude der empfangenen Messstrahlung (30, 36) bestimmt wird, insbesondere wobei eine hyperspektrale Intensitätsmessung erfolgt.

15. Computerprogrammprodukt, das auf einem maschinenlesbaren Träger gespeichert ist, oder Computer-Datensignal, verkörpert durch eine elektromagnetische Welle, mit Programmcode, zur Steuerung bzw. Durchführung des Verfahrens nach einem der Ansprüche 12 bis 14, insbesondere wenn das Programm in einer Steuer- und Auswerteeinheit eines Vermessungsgeräts (1) gemäss Anspruch 1 ausgeführt wird.

*Fig 1*

*Fig 2*

Fig 3a

Fig 3b

19

Fig 3c

Fig 3d

$\mathcal{Fig}\,4$

$\mathcal{Fig}\,5$

EP 3 165 876 A2

Fig 6a

Fig 6b

Fig 7a

Fig 7b

22

$\mathcal{F}ig\,8a$

$\mathcal{F}ig\,8b$

Fig 8c

Fig 9

*Fig 10*

*Fig 11*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0738899 A
- WO 2015073548 A
- EP 0701702 A
- EP 1686350 A
- WO 2007079600 A1
- EP 1869397 B1

**In der Beschreibung aufgeführte Nicht-Patentliteratur**

- **JELALIAN, A.V.** Laser Radar Systems. *Artech House,* 1992, 6
- **N. R. NEWBURY ; T.-A. LIU ; I. CODDINGTON ; F. GIORGETTA ; E. BAUMANN ; W. C. SWANN.** Frequency-Comb Based Approaches to Precision Ranging Laser Rada. National Institute of Standards and Technology